(19) Europäisches Patentamt / European Patent Office / Office européen des brevets

(11) **EP 4 780 129 A1**

(12) **EUROPEAN PATENT APPLICATION**
published in accordance with Art. 153(4) EPC

(43) Date of publication:
**22.07.2026 Bulletin 2026/30**

(21) Application number: **24888092.4**

(22) Date of filing: **08.11.2024**

(51) International Patent Classification (IPC):
**H04W 76/10** (2018.01)

(52) Cooperative Patent Classification (CPC):
**H04B 7/185; H04W 76/10; H04W 76/30; H04W 84/06**

(86) International application number:
**PCT/CN2024/130868**

(87) International publication number:
**WO 2025/098481 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.11.2023 CN 202311501708**

(71) Applicant: HUAWEI TECHNOLOGIES CO., LTD.
**Shenzhen 518129 (CN)**

(72) Inventors:
• **LIAO, Ting**
  **Shenzhen, Guangdong 518129 (CN)**
• **LI, Guanglei**
  **Shenzhen, Guangdong 518129 (CN)**
• **WANG, Yufang**
  **Shenzhen, Guangdong 518129 (CN)**
• **ZONG, Zaifeng**
  **Shenzhen, Guangdong 518129 (CN)**
• **YANG, Wenjin**
  **Shenzhen, Guangdong 518129 (CN)**

(74) Representative: **Gill Jennings & Every LLP**
  **The Broadgate Tower**
  **20 Primrose Street**
  **London EC2A 2ES (GB)**

(54) **SATELLITE COMMUNICATION METHOD AND DEVICE**

(57)     A satellite communication method and an apparatus are provided, and relate to the field of satellite communication technologies. In this method, when a first satellite enters a first service area, a core network element sends a connection establishment request message to a satellite-borne apparatus of the first satellite, or the satellite-borne apparatus sends the connection establishment request message to the core network element. When the first satellite leaves the first service area, the core network element sends a connection release request message to the satellite-borne apparatus of the first satellite, or the satellite-borne apparatus sends the connection release request message to the core network element. When the satellite enters or leaves the service area, the core network element or the satellite-borne apparatus may initiate a process of establishing or releasing a connection with the satellite-borne apparatus on the satellite. In this way, the connection between the satellite-borne apparatus on the satellite and the core network element can be dynamically managed based on motion of the satellite or a location change of the satellite.

FIG. 6

**Description**

CROSS-REFERENCE TO RELATED APPLICATIONS

This application claims priority to Chinese Patent Application No. 202311501708.0, filed with the China National Intellectual Property Administration on November 10, 2023 and entitled "SATELLITE COMMUNICATION METHOD AND APPARATUS", which is incorporated herein by reference in its entirety.

TECHNICAL FIELD

This application relates to the field of satellite communication technologies, and in particular, to a satellite communication method and an apparatus.

BACKGROUND

To enable a satellite to have a data processing capability, it is considered in the 3rd generation partnership project (3rd generation partnership project, 3GPP) that satellite-borne apparatuses such as an access network device, a router, and a user plane device are deployed on the satellite.

Because non-geostationary earth orbit satellites, such as a medium earth orbit (medium earth orbit, MEO) satellite and a low earth orbit (low earth orbit, LEO) satellite, move relative to the ground, for an area covered by a terrestrial core network, within a period of time in which a single satellite moves around the Earth for one circle, the single satellite covers the area only for a period of time from entering the area to leaving the area, but the satellite cannot cover the area in another time period, and cannot serve a terminal in the area.

As the satellite moves, a connection between the satellite and the terrestrial core network needs to be dynamically managed. Currently, there is no related solution.

SUMMARY

Embodiments of this application provide a satellite communication method and an apparatus, to dynamically manage a connection between a satellite-borne apparatus on a satellite and a core network element.

In embodiments of this application, a connection between a satellite-borne apparatus of a first satellite and a core network element may be dynamically managed based on motion of the first satellite or a location change of the first satellite.

A "first service area" may be understood as a service area that can be provided by an operator to which a core network belongs. The first service area may include one or more location areas, or include an area covered by one or more gateways.

In embodiments of this application, the dynamically managing the connection between the satellite-borne apparatus of the first satellite and the core network element may include creating the connection and/or releasing the connection. The connection between the satellite-borne apparatus and the core network element may also be understood as an interface between the satellite-borne apparatus and the core network element. Correspondingly, the creating the connection may be understood as creating interfaces or instances of the interfaces on the satellite-borne apparatus and the core network element. The interface or the instance of the interface created on the satellite-borne apparatus has an identifier of the core network element for connection, to identify an interface created to the specific core network element. Similarly, the interface or the instance of the interface created on the core network element has an identifier of the satellite-borne apparatus for connection, to identify an interface created to the specific satellite-borne apparatus. Similarly, releasing the connection may be understood as deleting the interfaces or the instances of the interfaces from the satellite-borne apparatus and the core network element. For example, the satellite-borne apparatus deletes the interface connected to the core network element or the instance of the interface, and the core network element deletes the interface connected to the satellite-borne apparatus and the instance of the interface.

The following describes solutions provided in this application.

According to a first aspect, a satellite communication method is provided. The method includes: A core network element determines that a first satellite enters a first service area. The core network element sends a connection establishment request message to a satellite-borne apparatus of the first satellite. The connection establishment request message is used to request to establish a connection between the core network element and the satellite-borne apparatus.

The foregoing implementation may also be understood as follows: When determining that the first satellite enters the first service area, the core network element sends the connection establishment request message to the satellite-borne apparatus of the first satellite; or may also be understood as follows: If determining that the first satellite enters the first service area, the core network element sends the connection establishment request message to the satellite-borne apparatus of the first satellite; or may also be understood as follows: When the first satellite enters the first service area, the core network element sends the connection establishment request message to the satellite-borne apparatus of the first satellite. In other words, a trigger condition for the core network element to send the connection establishment request message to the satellite-borne apparatus of the first satellite is that the first satellite enters the first service area, or the core network element determines that the first satellite enters the first service area. The connection establishment request message may also be understood as an interface establishment request message. An interface is created on the core network element, and is used to establish the connection with the satellite-borne apparatus of the first satellite. After receiving the interface establishment request message, the satellite-borne apparatus also creates an interface to the core network element, to establish the connection with the core network element.

In the foregoing implementation, when determining that the satellite enters the first service area, the core network element may initiate a process of establishing the connection with the satellite-borne apparatus on the satellite. In this way, the connection between the satellite-borne apparatus on the satellite and the core network element can be dynamically managed based on motion of the satellite or a location change of the satellite.

In a possible implementation, the method further includes: When the first satellite leaves the first service area, the core network element sends a connection release request message to the satellite-borne apparatus. The connection release request message is used to request to release the connection between the core network element and the satellite-borne apparatus.

In a possible implementation, the method further includes: The core network element disables the connection or the interface to the satellite-borne apparatus. Similarly, the satellite-borne apparatus disables the connection or the interface to the core network element based on the received connection release request message. Optionally, the operation of disabling the connection or the interface includes but is not limited to disabling or shutting down the interface. After the interface is disabled or shut down, the reachability of the connection is no longer detected, in other words, a packet used to detect the reachability of the connection is no longer sent.

In a possible implementation, the method further includes: The core network element sends a first request message to the satellite-borne apparatus. The first request message is used to request user service data transmission information of the satellite-borne apparatus. The core network element receives a first response message from the satellite-borne apparatus. The first response message includes the user service data transmission information of the satellite-borne apparatus. That the core network element sends the connection release request message to the satellite-borne apparatus of the first satellite includes: The core network element sends the connection release request message to the satellite-borne apparatus based on the first response message.

Optionally, the core network element may send the first request message before a second moment (to be specific, a moment at which the first satellite leaves the first service area).

Optionally, if determining, based on the first response message, that there is still user service data transmission, the core network element may send the first request message to the satellite-borne apparatus of the first satellite again after specified duration, and so on, until the core network element determines, based on a received report response message, that there is no user service data transmission.

Optionally, the first request message includes a cause value, and the cause value indicates that the satellite leaves the service area.

Optionally, the first response message includes first information, and the first information indicates that the satellite-borne apparatus has no user service data transmission.

In a possible implementation, the method further includes: When the first satellite leaves the first service area, the core network element sends a second request message to the satellite-borne apparatus. The second request message is used to request the satellite-borne apparatus to retain the connection and stop detecting reachability of the connection. The core network element retains the connection and stops detecting the reachability of the connection. Correspondingly, the satellite-borne apparatus retains the connection and stops detecting the reachability of the connection based on the received second request message.

Optionally, the retaining the connection and stopping detecting the reachability of the connection includes: retaining the connection and stopping detecting the reachability of the connection within a first time period, where the first time period is a time period from a second moment to a moment at which the first satellite enters the first service area again, and the second moment is a moment at which the first satellite leaves the first service area.

Optionally, the method further includes: When the first satellite enters the first service area again, the core network element re-establishes the connection, and/or re-starts to detect the reachability of the connection.

Optionally, the second request message includes a cause value, and the cause value indicates that the satellite leaves the service area.

Optionally, the method further includes: When the first satellite enters the first service area again, the core network element re-establishes the connection. An operation of re-establishing the connection includes but is not limited to not shutting down the interface, and re-starting to detect the reachability of the connection.

In a possible implementation, the method further includes: When the first satellite leaves the first service area, the core network element sends a third request message to the satellite-borne apparatus. The third request message is used to trigger the satellite-borne apparatus to send a connection release request message when there is no user service data transmission.

Optionally, the method further includes: The core network element releases the connection after receiving the connection release request message from the satellite-borne apparatus.

In a possible implementation, the method further includes: The core network element determines, based on capability information of the core network element and capability information of the satellite-borne apparatus, that the core network element sends the connection release request message when the first satellite leaves the first service area. Optionally, the capability includes having or not having a capability of determining that a satellite enters or leaves a service area.

Optionally, after the core network element sends the connection establishment request message to the satellite-borne apparatus of the first satellite, the method further includes: The core network element receives a connection release response message from the satellite-borne apparatus. The connection establishment response message includes the capability information of the satellite-borne apparatus. Optionally, the capability information indicates that the satellite-borne apparatus has or does not have the capability of determining that a satellite enters or leaves a service area.

In a possible implementation, the connection establishment request message further includes the capability information of the core network element. Optionally, the capability information indicates that the core network element has or does not have the capability of determining that a satellite enters or leaves a service area.

In a possible implementation, the method further includes: The core network element receives a connection release request message from the satellite-borne apparatus. The connection release request message is used to request to release the connection. The core network element releases the connection based on the connection release request message.

According to a second aspect, a communication method is provided, and includes: A core network element determines that a first satellite leaves a first service area. The core network element sends a connection release request message to a satellite-borne apparatus of the first satellite. The connection release request message is used to request to release a connection between the core network element and the satellite-borne apparatus.

The foregoing implementation may also be understood as follows: When determining that the first satellite leaves the first service area, the core network element sends the connection release request message to the satellite-borne apparatus of the first satellite; or may also be understood as follows: If determining that the first satellite leaves the first service area, the core network element sends the connection release request message to the satellite-borne apparatus of the first satellite; or may also be understood as follows: When the first satellite leaves the first service area, the core network element sends the connection release request message to the satellite-borne apparatus of the first satellite. In other words, a trigger condition for the core network element to send the connection release request message to the satellite-borne apparatus of the first satellite is that the first satellite leaves the first service area, or the core network element determines that the first satellite leaves the first service area.

In the foregoing implementation, when determining that a satellite leaves a service area, the core network element may initiate a process of releasing a connection with a satellite-borne apparatus on the satellite. In this way, the connection between the satellite-borne apparatus on the satellite and the core network element can be dynamically managed based on motion of the satellite or a location change of the satellite.

In a possible implementation, after the first satellite leaves the first service area, the method further includes: The core network element sends a first request message to the satellite-borne apparatus. The first request message is used to query whether the satellite-borne apparatus has user service data transmission. The core network element receives a first response message from the satellite-borne apparatus. That the core network element sends the connection release request message to the satellite-borne apparatus of the first satellite includes: If the first response message indicates that the satellite-borne apparatus has no user service data transmission, the core network element sends the connection release request message to the satellite-borne apparatus.

Optionally, the first request message includes a cause value, and the cause value indicates that the satellite leaves the service area.

Optionally, the first response message includes first information, and the first information indicates that the satellite-borne apparatus has no user service data transmission.

According to a third aspect, a communication method is provided, and includes: A core network element determines that a first satellite leaves a first service area. The core network element sends a second request message to a satellite-borne apparatus of the first satellite. The second request message is used to request the satellite-borne apparatus to retain a connection between the core network element and the satellite-borne apparatus and stop detecting reachability of the connection. The core network element retains the connection and stops detecting the reachability of the connection.

In a possible implementation, the retaining the connection and stopping detecting the reachability of the connection includes: retaining the connection and stopping detecting the reachability of the connection within a first time period, where the first time period is a time period from a second moment to a moment at which the first satellite enters the first service area again, and the second moment is a moment at which the first satellite leaves the first service area.

In a possible implementation, the method further includes: When the first satellite enters the first service area again, the core network element re-establishes the connection, and/or re-starts to detect the reachability of the connection.

In a possible implementation, the second request message includes a cause value, and the cause value indicates that the satellite leaves the service area.

In a possible implementation, the core network element is a session management function entity, and the satellite-borne apparatus of the first satellite is a satellite-borne user plane function entity of the first satellite; or the core network element is an access and mobility management function entity, and the satellite-borne apparatus of the first satellite is a satellite-borne radio access network device of the first satellite; or the core network element is a user plane function entity, and the satellite-borne apparatus of the first satellite is a satellite-borne radio access network of the first satellite.

According to a fourth aspect, a communication method is provided, and includes: A core network element determines that a first satellite leaves a first service area. The core network element sends a third request message to a satellite-borne apparatus of the first satellite. The third request message is used to trigger the satellite-borne apparatus to send a connection release request message when there is no user service data transmission.

In a possible implementation, the method further includes: The core network element releases a connection after receiving the connection release request message from the satellite-borne apparatus.

According to a fifth aspect, a satellite communication method is provided, and includes: A satellite-borne apparatus of a first satellite determines that the first satellite enters a first service area. The satellite-borne apparatus sends a connection establishment request message to a core network element. The connection establishment request message is used to request to establish a connection between the satellite-borne apparatus and the core network element.

The foregoing implementation may also be understood as follows: When determining that the first satellite enters the first service area, the satellite-borne apparatus sends the connection establishment request message to the core network element; or may also be understood as follows: If determining that the first satellite enters the first service area, the satellite-borne apparatus sends the connection establishment request message to the core network element; or may also be understood as follows: When the first satellite enters the first service area, the satellite-borne apparatus sends the connection establishment request message to the core network element. In other words, a trigger condition for the satellite-borne apparatus to send the connection establishment request message to the core network element is that the first satellite enters the first service area, or the satellite-borne apparatus determines that the first satellite enters the first service area.

In the foregoing implementation, when determining that a satellite enters a service area, a satellite-borne apparatus may initiate a process of establishing a connection with the core network element. In this way, the connection between the satellite-borne apparatus on the satellite and the core network element can be dynamically managed based on motion of the satellite or a location change of the satellite.

In a possible implementation, the method further includes: When the first satellite leaves the first service area, the satellite-borne apparatus sends a connection release request message to the core network element. The connection release request message is used to request to release the connection between the satellite-borne apparatus and the core network element.

In a possible implementation, before the satellite-borne apparatus sends the connection release request message to the core network element, the method further includes: The satellite-borne apparatus sends first indication information to the core network element. The first indication information indicates that the first satellite leaves the first service area.

In a possible implementation, the method further includes: When the first satellite leaves the first service area, the satellite-borne apparatus sends a fourth request message to the core network element. The fourth request message is used to request the core network element to retain the connection and stop detecting reachability of the connection. The satellite-borne apparatus retains the connection and stops detecting the reachability of the connection.

Optionally, the retaining the connection and stopping detecting the reachability of the connection includes: retaining the connection and stopping detecting the reachability of the connection within a first time period, where the first time period is a time period from a second moment to a moment at which the first satellite enters the first service area again, and the second moment is a moment at which the first satellite leaves the first service area.

Optionally, the method further includes: When the first satellite enters the first service area again, the satellite-borne apparatus re-establishes the connection, and/or re-starts to detect the reachability of the connection.

Optionally, the fourth request message includes a cause value, and the cause value indicates that the satellite leaves the service area.

In a possible implementation, the method further includes: The satellite-borne apparatus determines, based on a capability of the satellite-borne apparatus and a capability of the core network element, that the satellite-borne apparatus sends a connection release request message when the first satellite leaves the first service area. The capability includes having or not having a capability of determining that the satellite enters or leaves the service area.

Optionally, after the satellite-borne apparatus sends the connection establishment request message to the core network element, the method further includes: The satellite-borne apparatus receives a connection release response message from the core network element. The connection establishment response message includes capability information of the core network element. The capability information indicates that the core network element has or does not have the capability of determining that the satellite enters or leaves the service area.

In a possible implementation, the connection establishment request message further includes capability information of the satellite-borne apparatus. The capability information indicates that the satellite-borne apparatus has or does not have the capability of determining that the satellite enters or leaves the service area.

According to a sixth aspect, a communication method is provided, and includes: A satellite-borne apparatus of a first satellite determines that the first satellite leaves a first service area.

The satellite-borne apparatus sends a connection release request message to a core network element. The connection release request message is used to request to release a connection between the satellite-borne apparatus and the core network element.

The foregoing implementation may also be understood as follows: When determining that the first satellite leaves the first service area, the satellite-borne apparatus sends the connection release request message to the core network element; or may also be understood as follows: If determining that the first satellite leaves the first service area, the satellite-borne apparatus sends the connection release request message to the core network element; or may also be understood as follows: When the first satellite leaves the first service area, the satellite-borne apparatus sends the connection release request message to the core network element. In other words, a trigger condition for the satellite-borne apparatus to send the connection release request message to the core network element is that the first satellite leaves the first service area, or the satellite-borne apparatus determines that the first satellite leaves the first service area.

In the foregoing implementation, when determining that a satellite leaves a service area, a satellite-borne apparatus may initiate a process of releasing a connection with the core network element. In this way, the connection between the satellite-borne apparatus on the satellite and the core network element can be dynamically managed based on motion of the satellite or a location change of the satellite.

In a possible implementation, before the satellite-borne apparatus sends the connection release request message to the core network element, the method further includes: The satellite-borne apparatus sends first indication information to the core network element. The first indication information indicates that the first satellite leaves the first service area.

In a possible implementation, after or before the satellite-borne apparatus sends the connection release request message to the core network element (for example, at a moment at which it is determined that the first satellite leaves the first service area) or when the satellite-borne apparatus sends the connection release request message, the method further includes: The satellite-borne apparatus disconnects from a power supply; or the satellite-borne apparatus deletes interface information of the connection; or the satellite-borne apparatus disables an interface of the connection, stops detecting reachability of the connection, and disconnects from a power supply.

In any one of the first aspect to the sixth aspect, in a possible implementation, the core network element is a session management function entity, and the satellite-borne apparatus of the first satellite is a satellite-borne user plane function entity of the first satellite. The connection is a connection between N4 interfaces, or the connection is a connection established through an N4 interface, or the connection is abbreviated as an N4 interface, which means that reachability is implemented through the N4 interface. Alternatively, the core network element is an access and mobility management function entity, and the satellite-borne apparatus of the first satellite is a satellite-borne radio access network device of the first satellite. The connection is a connection between N2 interfaces, or the connection is a connection established through an N2 interface, or the connection is abbreviated as an N2 interface, which means that reachability is implemented through the N2 interface. Alternatively, the core network element is a user plane function entity, and the satellite-borne apparatus of the first satellite is a satellite-borne radio access network of the first satellite. The connection is a connection between N3 interfaces, or the connection is a connection established through an N3 interface, or the connection is abbreviated as an N3 interface, which means that reachability is implemented through the N3 interface.

In any one of the first aspect to the sixth aspect, in a possible implementation, that the core network element determines that the first satellite enters the first service area includes: The core network element determines, based on one or more of the following information, that the first satellite enters the first service area: ephemeris information, ground coverage information, or connection information of a feeder link between the first satellite and a gateway. The core network element receives first indication information from the satellite-borne apparatus. The ground coverage information includes time information of covering the first service area by the first satellite. The first indication information indicates that the first satellite enters the first service area.

In any one of the first aspect to the sixth aspect, in a possible implementation, that the core network element determines that the first satellite leaves the first service area includes: The core network element determines, based on one or more of the following information, that the first satellite leaves the first service area: ephemeris information, ground coverage information, or connection information of a feeder link between the first satellite and a gateway. The core network element receives second indication information from the satellite-borne apparatus. The second indication information indicates that the first satellite leaves the first service area.

In any one of the first aspect to the sixth aspect, in a possible implementation, that the satellite-borne apparatus determines that the first satellite enters the first service area includes: The satellite-borne apparatus determines, based on one or more of the following information, that the first satellite enters the first service area: ephemeris information, ground coverage information, or connection information of a feeder link between the first satellite and a gateway.

In any one of the first aspect to the sixth aspect, in a possible implementation, that the satellite-borne apparatus determines that the first satellite leaves the first service area includes: The satellite-borne apparatus determines, based on one or more of the following information, that the first satellite leaves the first service area: ephemeris information, ground coverage information, or connection information of a feeder link between the first satellite and a gateway.

According to a seventh aspect, a communication apparatus is provided, and includes a unit or a module configured to perform the method according to any one of the first aspect to the sixth aspect.

According to an eighth aspect, a communication apparatus is provided, and includes one or more processors configured to perform the method according to any one of the first aspect to the sixth aspect.

According to a ninth aspect, a communication system is provided, and includes a satellite-borne apparatus and a core network element. The core network element is configured to perform the method according to any implementation of the first aspect, and the satellite-borne apparatus is configured to receive the connection establishment request message; or the core network element is configured to perform the method according to any one of the second aspect, the third aspect, or the fourth aspect, and the satellite-borne apparatus is configured to receive the connection release request message; or the satellite-borne apparatus is configured to implement the method according to any implementation of the fifth aspect, and the core network element is configured to receive the connection establishment request message; or the satellite-borne apparatus is configured to implement the method according to any implementation of the sixth aspect, and the core network element is configured to receive the connection release request message.

According to a tenth aspect, a computer-readable storage medium is provided. The computer-readable storage medium stores a computer program or instructions. When the computer program or the instructions are executed by a communication apparatus, the method according to any one of the first aspect to the sixth aspect is implemented.

According to an eleventh aspect, a chip system is provided, and includes: a memory, configured to store a computer program; and a processor. After the processor invokes the computer program from the memory and runs the computer program, a communication apparatus in which the chip system is mounted is caused to perform the method according to any one of the first aspect to the sixth aspect.

According to a twelfth aspect, a computer program product is provided. When the computer program product is invoked by a computer, the computer is caused to perform the method according to any one of the first aspect to the sixth aspect.

## BRIEF DESCRIPTION OF DRAWINGS

FIG. 1 is a diagram of an architecture of a 5G communication system;

FIG. 2 is a diagram of an architecture of a satellite communication system to which an embodiment of this application is applicable;

FIG. 3 is a diagram of an architecture of another satellite communication system to which an embodiment of this application is applicable;

FIG. 4 is a diagram in which a satellite moves into a service area and leaves the service area over time according to an embodiment of this application;

FIG. 5 is a diagram of physical meanings of some ephemeris parameters according to an embodiment of this application;

FIG. 6 is a diagram of initiating a connection establishment process by a core network element when determining that a first satellite enters a first service area according to an embodiment of this application;

FIG. 7 is a diagram of initiating a connection release process by a core network element when determining that a first satellite leaves a first service area according to an embodiment of this application;

FIG. 8 is a diagram of initiating a connection establishment process by a satellite-borne apparatus when determining that a first satellite enters a first service area according to an embodiment of this application;

FIG. 9 is a diagram of initiating a connection release process by a satellite-borne apparatus when determining that a first satellite leaves a first service area according to an embodiment of this application;

FIG. 10 is a schematic flowchart for establishing/releasing an N4 interface according to an embodiment of this application;

FIG. 11 is another schematic flowchart for establishing/releasing an N4 interface according to an embodiment of this application;

FIG. 12 is another schematic flowchart for establishing/releasing an N4 interface according to an embodiment of this application;

FIG. 13 is another schematic flowchart for establishing/releasing an N4 interface according to an embodiment of this application;

FIG. 14 is a schematic flowchart for establishing/releasing an N2 interface according to an embodiment of this application;

FIG. 15 is another schematic flowchart for establishing/releasing an N2 interface according to an embodiment of this application;

FIG. 16 is a schematic flowchart for establishing/releasing an N3 interface according to an embodiment of this application;

FIG. 17 is another schematic flowchart for establishing/releasing an N3 interface according to an embodiment of this application;

FIG. 18 is a diagram of a structure of a communication apparatus according to an embodiment of this application; and

FIG. 19 is a diagram of a structure of another communication apparatus according to an embodiment of this application.

## DESCRIPTION OF EMBODIMENTS

Embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a subsequently evolved communication system. This is not limited in embodiments of this application.

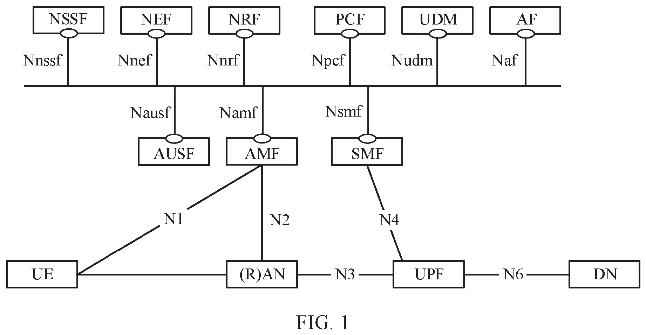

FIG. 1 is a diagram of a 5G network architecture based on a service-based architecture provided by the 3rd generation partnership project (3rd generation partnership project, 3GPP) organization. The 5G network architecture may include an access network device and a core network device. A terminal accesses a data network (data network, DN) via the access network device and the core network device.

In FIG. 1, the terminal may include various handheld devices, vehicle-mounted devices, wearable devices, or computing devices that have a wireless communication function, or other processing devices connected to a wireless modem. The terminal may also be referred to as a terminal device. The terminal may alternatively be user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a smart point of sale (point of sale, POS), a customer-premises equipment (customer-premises equipment, CPE), a machine type communication (machine type communication, MTC) terminal, a communication device mounted on a high-altitude airplane, a wearable device, an uncrewed aerial vehicle, a robot, a terminal in D2D, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like.

In FIG. 1, the access network device may be a radio access network (radio access network, RAN) device or a wired access network device. The RAN can manage radio resources, provide an access service for the terminal, and complete forwarding of user data between the terminal and a core network. The RAN may also be understood as a base station in a network.

For example, the access network device in embodiments of this application may be any communication device that has a wireless transceiver function and that is configured to communicate with the terminal. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved base station (home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB or a transmission point (a TRP or a TP) in a 5G mobile communication system like a new radio (next radio, NR) system, may be one antenna panel or a group (including multiple antenna panels) of antenna panels of a base station in the 5G mobile communication system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements a part of functions of the gNB, and the DU implements a part of the functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of a processing function of the physical layer, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network, or the CU may be classified as an access network device in a core network (core network, CN). This is not limited in this application.

The access network device and the terminal may be at fixed locations, or may be movable. The access network device and the terminal may be deployed on land, including an indoor device, an outdoor device, a hand-held device, or a vehicle-mounted device; may be deployed on the water; or may be deployed on an airplane, a balloon, and an artificial satellite in the air.

In FIG. 1, the core network device may include a unified data management (unified data management, UDM) network element, an access and mobility management function (access and mobility function, AMF) network element, a session management function (session management function, SMF) network element, a policy control function (policy control function, PCF) network element, an application function (application function, AF) network element, a user plane function (user plane function, UPF) network element, a network exposure function (network exposure function, NEF) network element, a network repository function (network repository function, NRF) network element, a network slice selection function (network slice selection function, NSSF) network element, an authentication server function (authentication server function, AUSF) network element, and the like. These functional units can work independently or can be combined to implement some control functions. For example, the AMF, the SMF, and the PCF may be combined as a management device, and are configured to complete access control and mobility management functions such as access authentication, security encryption, and location registration of the terminal device, session management functions such as establishment, release, and a change of a user plane transmission path, and a function of analyzing data (for example, congestion) related to some slices (slices) and data related to the terminal device.

The UPF serves as an interface to the data network, and may complete functions such as user plane data forwarding, session-based/flow level-based charging statistics, and bandwidth limitation, that is, packet routing and forwarding, quality of service (quality of service, QoS) handling for user plane data, and the like.

The AMF mainly performs functions such as mobility management, and access authentication/authorization. In addition, the AMF is further responsible for transferring a user policy between the terminal and the policy control function (policy control function, PCF) network element.

The SMF is mainly used for session management after user access, including establishment, modification, activation, deactivation, release, and the like of a protocol data unit (protocol data unit, PDU) session, UE IP address allocation, a dynamic host configuration protocol (dynamic host configuration protocol, PDCH) v4/v6 function, an address resolution protocol (Address Resolution Protocol, ARP) proxy, IPv6 Neighbor Solicitation Proxying for Ethernet PDU, selection and control of a user plane, determining an SSC mode of a session, roaming, and the like.

The PCF is mainly configured to support a unified policy framework to govern network behavior, provide policy rules to a control plane network element (for example, the AMF or the SMF), and access subscription information relevant for policy decisions in a unified data repository (unified data repository, UDR).

The UDM is mainly used for generation of 3GPP AKA authentication credentials, user ID handling, and unified management of data related to functions such as access authorization based on subscription data, serving NF registration management, and subscription management.

The data network (data network, DN) provides, for example, an operator service, an internet access service, or a third-party service, and includes a server, where the server implements video source encoding, rendering, and the like. The DN is a combination of a data terminal device, a data processing device, and a data communication device (including a communication channel), and provides a data transmission function and a resource sharing function including data and a data processing capability for communication stations and users distributed at different locations.

A 5G core network may further include a controller, and the controller may also be referred to as a management server or a network management server. The controller is configured to manage and control a satellite-borne apparatus on a satellite or a ground network element, including but not limited to delivery of a configuration and delivery of an entry.

In FIG. 1, Npcf, Nudr, Nudm, Naf, Namf, and Nsmf are respectively service-based interfaces provided by the PCF, the UDR, the UDM, the AF, the AMF, and the SMF, and are configured to invoke corresponding service-based operations. N1, N2, N3, N4, and N6 are interface sequence numbers. Meanings of these interface sequence numbers are as follows:

(1) The N1 interface is an interface between the AMF and the UE, and may be configured to transfer non-access stratum (non-access stratum, NAS) signaling (for example, including a QoS rule from the AMF) to the UE, and the like.
(2) The N2 interface is an interface between the AMF and the RAN, and may be configured to transfer radio bearer control information or the like from a core network side to the RAN.
(3) The N3 interface is an interface between the RAN and the UPF, and is mainly configured to transfer uplink and downlink user plane data between the RAN and the UPF.
(4) The N4 interface is an interface between the SMF and the UPF, and may be configured to transfer information between a control plane and a user plane, including delivery of a forwarding rule, a QoS rule, a traffic statistics rule, and the like from the control plane to the user plane, and reporting of user plane information.
(5) The N6 interface is an interface between the UPF and the DN, and is mainly configured to transfer uplink and downlink user plane data flows between the UPF and the DN.

It should be noted that, FIG. 1 is merely an example diagram of the architecture. The network architecture may further include another network element or function entity, in addition to the network elements or function entities shown in FIG. 1. This is not limited in embodiments of this application.

It should be understood that a name of an interface between network elements in this application is merely an example, and the interface between the network elements may alternatively have another name. The name of the interface is not limited in embodiments of this application.

To enhance a processing capability of a satellite, currently, it is considered to deploy communication-related functions such as an access function, a routing function, and a data transmission function on the satellite. These functions may be implemented by a corresponding apparatus deployed on the satellite. The apparatus may be referred to as a satellite-borne apparatus. For example, the satellite-borne apparatus may include a satellite-borne RAN (or referred to as a satellite-borne base station), a satellite-borne router, a satellite-borne UPF, and the like. The satellite-borne RAN may implement a part or all of functions of the RAN in FIG. 1, the satellite-borne UPF may implement a part or all of functions of the UPF in FIG. 1, and the satellite-borne router may implement inter-satellite routing or satellite-ground routing.

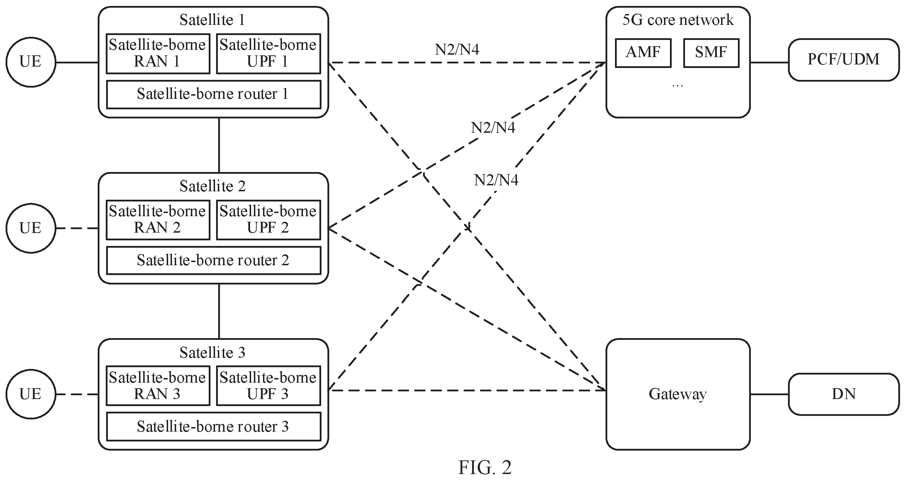

FIG. 2 shows an architecture of a satellite communication system according to an embodiment of this application. In the system architecture, a satellite-borne RAN 1, a satellite-borne UPF 1, and a satellite-borne router 1 are deployed on a satellite 1. Similarly, a satellite-borne RAN 2, a satellite-borne UPF 2, and a satellite-borne router 2 are deployed on a satellite 2, and a satellite-borne RAN 3, a satellite-borne UPF 3, and a satellite-borne router 3 are deployed on a satellite 3. The satellite 1 is used as an example. The satellite RAN 1 may establish an N2 interface (or referred to as an N2 interface-based control plane signaling connection) with an AMF in a 5G core network, and the satellite UPF 1 may establish an N4 interface (or referred to as an N4 interface-based control plane signaling connection) with an SMF in the 5G core network. A feeder link connection is further established between the satellite and a ground gateway. When another network element of the core network and a DN are deployed on the ground, signaling and/or data transmission need to be performed over the feeder link for communication between the satellite-borne apparatus and the ground network element. A terminal may access the satellite communication system via the satellite-borne RAN, and perform data transmission with the ground DN via the satellite-borne apparatus and the gateway.

The gateway in FIG. 2 is a gateway device, and may also be referred to as a satellite gateway or a hub. The gateway transmits data of the DN to the satellite, or transmits data received from the satellite to the DN. The gateway houses an antenna and a radio frequency device, and converts a radio frequency (RF) signal into an internet protocol (IP) signal for ground connection. A communication link between the gateway and the satellite is referred to as a feeder link.

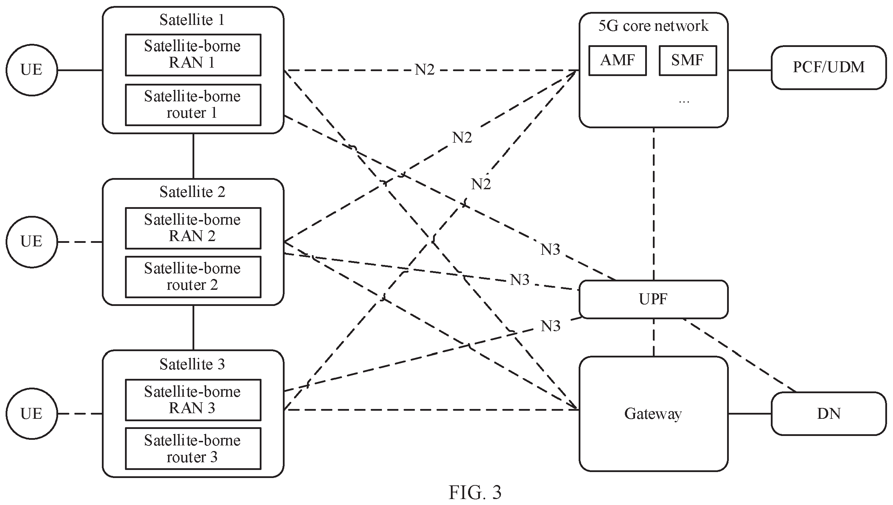

FIG. 3 shows an architecture of another satellite communication system according to an embodiment of this application. At an early stage of satellite function enhancement, usually, a satellite-borne RAN and/or a satellite-borne router are/is first deployed on a satellite. Therefore, the system architecture shown in FIG. 3 may exist. In the system architecture, a satellite-borne RAN 1 and/or a satellite-borne router 1 are/is deployed on a satellite 1. Similarly, a satellite-borne RAN 2 and a satellite-borne router 2 are deployed on a satellite 2, and a satellite-borne RAN 3 and/or a satellite-borne router 3 are/is deployed on a satellite 3. The satellite 1 is used as an example. The satellite RAN 1 may establish an N2 interface (or referred to as an N2 interface-based control plane signaling connection) with an AMF in a 5G core network, and the satellite RAN 1 may establish an N3 interface (or referred to as an N3 interface-based user plane data connection) with a UPF in the 5G core network. A feeder link connection may be further established between a satellite-borne RAN of a satellite and a ground gateway. A terminal may access the satellite communication system via the satellite-borne RAN, and perform data transmission over the user plane data connection between the satellite-borne RAN and the 5G core network, that is, perform data transmission with a ground DN via the satellite, a gateway, and the user plane network element UPF.

Optionally, the UPF may be disposed at a location close to the gateway.

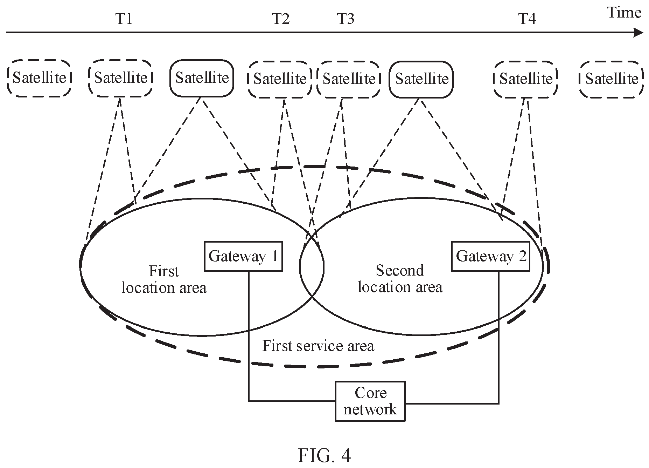

The satellite in the system architecture shown in FIG. 2 or FIG. 3 may be a non-geostationary earth orbit satellite, for example, a low earth orbit (low earth orbit, LEO) satellite or a medium earth orbit (medium earth orbit, MEO) satellite. Coverage of the non-geostationary earth orbit satellite is smaller than that of a geostationary-earth orbit (geostationary-earth orbit, GEO) satellite, and the coverage moves over time. FIG. 4 is a diagram of an example in which a satellite moves into a service area and leaves the service area over time. As shown in FIG. 4, motion of the satellite relative to the Earth generates relative motion. Based on the relative motion between the satellite and the ground, at a moment T1, the satellite enters a first location area; at a moment T2, the satellite leaves the first location area; at a moment T3, the satellite enters a second location area; and at a moment T4, the satellite leaves the second location area. The first location area is an area covered by a gateway 1, and the second location area is an area covered by a gateway 2. A coverage area of the gateway 1 may overlap or may not overlap a coverage area of the gateway 2. This may be determined based on coverage of satellites above the gateway 1 and the gateway 2.

The gateway 1 and the gateway 2 may be connected to a same core network, or may be connected to different core networks. The core networks belong to a same operator, which may be a satellite operator or a terrestrial operator cooperating with the satellite operator. When the gateway 1 and the gateway 2 are connected to a same core network, the first location area and the second location area belong to a same service area. When the gateway 1 and the gateway 2 are connected to different core networks, the first location area and the second location area belong to different service areas. In other words, one service area may include one or more location areas, or one service area may include an area covered by one or more gateways.

In a possible deployment scenario of the core network and the gateway, a satellite may cover a service area for about 10 to 20 minutes, while the satellite takes about 90 minutes to travel around the Earth. In this case, compared with the time taken by the satellite to travel around the Earth, the satellite covers the service area for a maximum of only 1/5 of the time.

Therefore, how to dynamically manage a connection between a satellite-borne apparatus and a core network element based on satellite motion is a problem that needs to be resolved currently.

Therefore, embodiments of this application provide a satellite communication method and a related apparatus that can implement the method. The following describes embodiments of this application in detail.

To better understand embodiments of this application, the following first describes terms in embodiments of this application.

(1) Ephemeris information

An ephemeris (ephemeris) may also be referred to as an ephemeris table, a calendar, an almanac, or the like, and is information used to locate a location of a celestial body at any moment. Ephemeris information means information related to a satellite constellation, and may usually include three-dimensional space location information of a satellite, velocity state vector information, information about an orbit at which the satellite is located, and the like. Specifically, the information may be classified into a location and a velocity state vector of the satellite, orbital plane parameters (orbital plane parameters), satellite level parameters (satellite level parameters), and the like. Basic elements (parameters) included in a satellite ephemeris of a 3GPP RAN working group in RAN2#108 meeting are shown in Table 1 below.

Table 1

| Orbital plane parameters (orbital plane parameters) | $\sqrt{\alpha}$ | Square root of semi-major axis (square root of semi-major axis (semi-major axis)) |
| --- | --- | --- |
| | e | Eccentricity (eccentricity) |
| | $i_0$ | Inclination angle at reference time (inclination angle at reference time (inclination)) |
| | $\Omega_0$ | Longitude of an ascending node of an orbit plane (longitude of ascending node of orbit plane (right ascension of the ascending node)) |
| | $\omega$ | Argument of a perigee (argument of perigee (argument of periapsis)) |
| Satellite level parameters (satellite level parameters) | $M_0$ | Mean anomaly at the reference time (mean anomaly at reference time (true anomaly and a reference point in time)) |
| | $T_{0e}$ | Epoch (the epoch) |

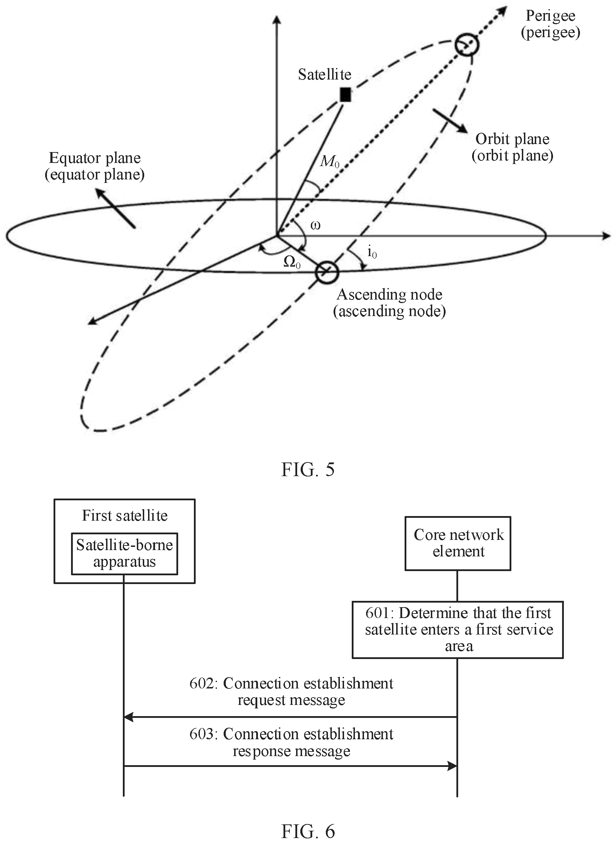

FIG. 5 is a diagram of physical meanings represented by some ephemeris parameters. In FIG. 5, an ascending node is an intersection point between a satellite and the equator plane when the satellite passes through the equator plane from south to north. An argument of a perigee is an angle from the ascending node to the perigee in a running direction of the satellite within an orbit plane of the satellite, and a value of the argument is a degree ranging from 0° to 360°.

It should be understood that Table 1 merely describes examples of some specific parameters that may be included in the ephemeris parameters. In embodiments of this application, the ephemeris parameter may not include one or more of the foregoing parameters, or may include another type of parameter. Specific content of the ephemeris parameter is not limited in embodiments of this application.

It should be further understood that in embodiments of this application, the ephemeris information may also be referred to as an ephemeris parameter, an ephemeris parameter of the satellite, an ephemeris parameter of a satellite in a satellite access network, an ephemeris parameter of a satellite in a satellite backhaul, or another possible name. This is not limited in this application.

The ephemeris occupies large space. Ephemeris information is usually configured in a pre-configuration manner. In some embodiments of this application, all orbit parameters and all satellite parameters that may serve a terminal may be pre-configured on a core network element.

(2) Ground coverage information

The ground coverage information is also referred to as ground coverage information of a satellite, satellite coverage information, satellite reachability information, satellite availability information, satellite coverage availability information, or the like. The ground coverage information may indicate an area that is on the ground and that can be covered by a satellite signal. For example, the ground coverage information may include time information of covering each of one or more areas (for example, a grid point, a matrix area diagram, or a service area range) by one or more satellites. Optionally, the time information may include a time point and/or a time period. For example, for a first service area and a first satellite that can cover the area, the ground coverage information includes time information of covering the first service area by the first satellite, and may specifically include a time point at which the first satellite enters the first service area and duration in which the first satellite covers the first service area, or a time period in which the first satellite covers the first service area. A start time point of the time period is the time point at which the first satellite enters the first service area, and an end time point of the time period is a time point at which the first satellite leaves the first service area.

The ground coverage information of the satellite may be determined based on the ephemeris information, in other words, there is a mapping relationship between the ephemeris information and the ground coverage information. For example, ground coverage information 1 of a satellite A may be determined based on ephemeris information 1 of the satellite A.

(3) Connection information of a feeder link

Based on the communication system architecture shown in FIG. 2 or FIG. 3, the connection information of the feeder link describes a status of a signal channel between the satellite-borne RAN and the gateway, for example, whether the signal channel is normal. When a sent signal can be received by the other party, it is considered that the signal channel is normal.

In a possible implementation of embodiments of this application, the connection information of the feeder link may be signal strength information. When the satellite-borne RAN receives a signal from the gateway, and strength of the signal is increasingly strong and reaches a specified threshold, it may be considered that a signal channel between the satellite-borne RAN and the gateway is normal, or a satellite enters an area covered by the gateway. When the satellite-borne RAN senses that the strength of the signal between the satellite-borne RAN and the gateway is increasingly weak and is less than the specified threshold, it may be considered that the signal channel between the satellite-borne RAN and the gateway is blocked, or the satellite leaves the area covered by the gateway.

The connection information of the feeder link may alternatively be sensed by a satellite-borne router (router). When laser communication is performed over the feeder link between the satellite and the gateway, the router may sense a laser communication status on the link, and send, to the satellite-borne apparatus like the satellite-borne UPF or the satellite-borne RAN through an internal connection/interface of the satellite, information that a channel of the feeder link is normal or blocked.

(4) First service area

In embodiments of this application, the first service area may be understood as a service area that can be provided by an operator to which a core network belongs. In other words, the first service area may be a service area of a satellite operator to which a first satellite belongs. To be specific, the satellite operator may provide a service for a user in the first service area, or the first service area may be a service area of an operator A that signs a contract with the satellite operator.

The first service area may include one or more location areas, and the location area is an area covered by a gateway. In other words, the first service area may include an area covered by one or more gateways. The area covered by the gateway may be understood as a local area covered by the gateway, and the local area may be understood as an area providing an actual service, or a local area that can be theoretically covered.

(5) Entering a first service area and leaving the first service area

In embodiments of this application, when a first satellite satisfies, at a location of a first moment, an entering condition for entering the first service area, the first satellite enters the first service area at the moment or at the location. The entering condition may be understood as follows: As the first satellite moves, when the first satellite moves to a location or at a moment, signal coverage of the first satellite overlaps a range of the first service area, that is, the entering condition is satisfied. In other words, it may be considered that the first satellite enters the first service area at the location or at the moment. Alternatively, as the first satellite moves, the signal coverage of the first satellite overlaps the range of the first service area, and a size of an overlapping area satisfies a first requirement at a subsequent location or moment. In this case, the entering condition is satisfied. In other words, it may be considered that the first satellite enters the first service area at the location or at the moment. For example, when the size of the overlapping area gradually increases and reaches a specified threshold at a first moment, or if an area proportion of the overlapping area in a location area covered by an ingress gateway reaches a specified threshold at the first moment, the first satellite enters the first service area at the first moment. Alternatively, the entering condition may also be understood as follows: As the first satellite moves, when the first satellite moves to a location or at a moment, the first satellite receives a signal sent by an ingress gateway. When strength of a signal satisfies a second requirement, the entering condition is satisfied. In other words, it may be considered that the first satellite enters the first service area at the location or at the moment. For example, when strength of the signal received by the first satellite from the ingress gateway gradually increases and reaches a specified threshold at the first moment, the first satellite enters the first service area at the first moment.

Similarly, when the first satellite satisfies, at a location of a second moment, a leaving condition for leaving the first service area, the first satellite leaves the first service area at the moment or at the location. The leaving condition may be understood as: As the first satellite moves, when the first satellite moves to a location, the signal coverage of the first satellite no longer overlaps the range of the first service area, or the size of the overlapping area no longer satisfies the first requirement. In this case, the leaving condition is satisfied. In other words, it may be considered that the first satellite leaves the first service area when the first satellite moves to the location. For example, at the second moment, the size of the overlapping area is reduced to or below the specified threshold, or if the area proportion of the overlapping area in the location area covered by the ingress gateway is reduced to or below the specified threshold, the first satellite leaves the first service area at the second moment. Alternatively, the leaving condition may be understood as follows: As the first satellite moves, strength of a signal that is sent by an egress gateway and that is received by the first satellite no longer satisfies the second requirement. In this case, the leaving condition is satisfied. In other words, it may be considered that the first satellite leaves the first service area at the moment. For example, if the strength of the signal received by the first satellite from the egress gateway is increasingly weak and decreases to or below the specified threshold at the second moment, the first satellite leaves the first service area at the second moment.

The ingress gateway is a 1st gateway of the first satellite in the first service area or a 1st gateway connected to the first satellite in the first service area. The egress gateway is a last gateway of the first satellite in the first service area or a last gateway connected to the first satellite in the first service area.

While the first satellite moves in an orbit, the Earth also rotates. In this way, relative motion of the first satellite occurs relative to the ground. For the first service area on the ground, the first service area includes multiple location areas, and the first satellite passes through the multiple location areas in sequence based on the motion of the first satellite relative to the ground, for example, the first satellite passes through a location area 1, a location area 2, ..., and a location area N in sequence. The location area 1 may be referred to as an area covered by a 1st gateway of the first satellite in the first service area, or referred to as an area covered by an ingress gateway of the first satellite in the first service area, or referred to as an ingress location area of the first satellite in the first service area, or a similar expression. The location area N may be referred to as an area covered by a last gateway of the first satellite in the first service area, or referred to as an area covered by an egress gateway of the first satellite in the first service area, or referred to as an egress location area of the first satellite in the first service area, or a similar expression. Correspondingly, when the first satellite enters the location area 1, it may be considered that the first satellite enters the first service area. When the first satellite leaves the location area N, it may be considered that the first satellite leaves the first location area.

FIG. 4 is used as an example. The first location area and the second location area belong to a first service area that can be provided by an operator of a core network connected to the gateway 1 and the gateway 2. In other words, the first service area in the figure includes the first location area and the second location area. The satellite enters the first location area at the moment T1, that is, enters the first service area, and leaves the second location area at the moment T4, that is, leaves the first service area.

If the first satellite passes through only one location area of the first service area, the first satellite enters the location area, that is, enters the first service area, and the first satellite leaves the location area, that is, leaves the first service area.

It should be understood that "enter" may also be replaced with "move into" or another similar expression, and "leave" may also be replaced with "move out of" or another similar expression.

The following describes in detail embodiments of this application with reference to accompanying drawings.

Based on the architecture of the satellite communication system shown in FIG. 2 or FIG. 3, FIG. 6 is a schematic flowchart of a satellite communication method according to an embodiment of this application. The procedure describes a process in which a core network element initiates, when sensing that a first satellite enters a first service area, to establish a connection with a satellite-borne apparatus of the first satellite.

As shown in FIG. 6, the procedure may include the following steps.

Step 601: The core network element determines that the first satellite enters the first service area.

In a possible implementation, the core network element determines, based on ephemeris information, that the first satellite enters the first service area.

Specifically, because the ephemeris information may be used to locate a location of a celestial body at any moment, the core network element may determine (or calculate) a location of the first satellite at a moment based on the ephemeris information. If the first satellite satisfies an entering condition for entering the first service area at a location at a first moment, the first satellite enters the first location area at the first moment. For example, if at the location of the first satellite at the first moment, signal coverage of the first satellite overlaps the first service area or a range of a location area covered by a $1^{st}$ gateway of the first satellite in the first service area, or an area size or proportion of an overlapping area reaches a specified threshold, the first satellite enters the first service area at the first moment or at the location.

The ephemeris information may be pre-configured on the core network element. When the ephemeris information is updated, the ephemeris information on the core network element may be reconfigured. In addition, the core network element may alternatively obtain the ephemeris information according to a specified periodicity, for example, obtain the ephemeris information once every hour. Specifically, the core network element may obtain the ephemeris information from an ephemeris information platform. The ephemeris information platform may be an independent ephemeris management server, or may be integrated into a controller of a satellite operator. The controller is configured to manage and control a part or all of communication apparatuses. The controller may have a built-in ephemeris management platform, or may obtain all ephemeris information from an ephemeris management server loaded with the ephemeris information platform, to provide the ephemeris information for the managed communication apparatuses.

In another possible implementation, the core network element determines, based on ground coverage information, that the first satellite enters the first service area.

The ground coverage information may be used to locate a location of a satellite at any moment, and the core network element may determine (or calculate) a location of the first satellite at a moment based on the ground coverage information.

The core network element may determine, based on the ground coverage information, a location of the satellite at each moment. If the first satellite at the location at the first moment satisfies a condition for entering the first service area, the first satellite enters the first location area at the first moment. For example, if at the location of the first satellite at the first moment, signal coverage of the first satellite overlaps the first service area or a range of a location area covered by a $1^{st}$ gateway of the first satellite in the first service area, or an area size or proportion of an overlapping area satisfies a first requirement, the first satellite enters the first service area at the first moment or at the location.

The ground coverage information may be pre-configured on the core network element, or the core network element may obtain the ground coverage information according to a specified periodicity. For example, the core network element may obtain the ground coverage information from a management platform. In addition, the core network element (for example, an AMF, an SMF, or the controller) may also calculate corresponding ground coverage information based on the ephemeris information, or the ephemeris information platform stores predicted ground coverage information of each satellite at different moments. Correspondingly, the core network element may obtain, from the ephemeris information platform, predicted ground coverage information of the first satellite at different moments.

In another possible implementation, the core network element determines, based on connection information of a feeder link between the first satellite and a gateway, that the first satellite enters the first service area.

The connection information of the feeder link between the first satellite and the gateway may include strength information of a signal on the feeder link, and specifically, may be signal strength information of a signal received by the gateway from the first satellite. Optionally, the signal strength information may include reference signal received strength (reference signal received power, RSRP) or reference signal received quality (reference signal received quality, RSRQ). The core network element may obtain the foregoing information from the gateway.

Specifically, the core network element may sense the connection information of the feeder link between the gateway and the first satellite based on the information from the gateway. For example, the gateway may notify the core network element of the signal strength information on the feeder link, so that the core network element can sense the strength information of the signal received by the gateway from the first satellite in the first service area. The first satellite performs signal interaction with an ingress gateway in the first service area and establishes a feeder link. As the first satellite moves, strength of the signal received by the gateway from the first satellite gradually increases. Correspondingly, if determining that the strength of the signal received by the gateway from the first satellite gradually increases and reaches a specified threshold, the core network element determines that the first satellite enters the first service area in which the gateway is located.

In another possible implementation, the core network element determines, by receiving first indication information from the first satellite (or a satellite-borne apparatus of the first satellite), that the first satellite enters the first service area.

In an example, the first indication information may indicate that the first satellite enters the first service area.

It may be understood that step 601 may be replaced with: The core network element receives the first indication information from the first satellite (or the satellite-borne apparatus of the first satellite).

For example, the first indication information may be a bit in a message. If the bit is set to 1, it indicates that the first satellite enters the first service area. If the bit is set to 0, it indicates that the first satellite leaves the first service area.

Specifically, the first satellite performs signal interaction with an ingress gateway in the first service area, and establishes a feeder link. As the first satellite moves, strength of a signal received by the first satellite from the ingress gateway gradually increases. If the strength of the signal received by the first satellite from the ingress gateway gradually increases and reaches a specified threshold, the first satellite may determine that the first satellite enters a location area in which the ingress gateway is located, and determine that the first satellite enters the first service area. In this case, the first satellite may send the first indication information to the core network element, to indicate that the first satellite enters the first service area.

In another example, the first indication information may indicate a location area that the first satellite currently enters.

Correspondingly, the core network element may determine, based on the location area indicated by the first indication information, whether the first satellite enters the first service area, or determine whether the location area indicated by the first indication information is a location area covered by an ingress gateway of the first satellite in the first service area.

Optionally, a signal sent by the gateway may include information about the gateway (for example, an identifier of the gateway) and/or information about a location area of the gateway and/or the first service area (for example, an identifier or coordinates of the location area and/or an identifier or coordinates of the first service area). Correspondingly, the first satellite may determine, based on the foregoing information, a specific service area that the first satellite currently enters, and send the first indication information to the core network element, to indicate the location area or the service area that the first satellite currently enters. If the core network element determines, based on the service area information indicated by the first indication information, that the service area information matches a service providing area range (namely, the first service area) of an operator of the core network, it is determined that the first satellite enters the first service area. Alternatively, if the core network determines, based on the location area information indicated by the first indication information, that the location area information matches a service providing area range (namely, the first service area) of the operator of the core network, and the location area corresponding to the location area information indicated by the first indication information is the location area of the ingress gateway of the first satellite in the service area, it is determined that the first satellite enters the first service area.

It should be understood that the core network element may alternatively determine, based on at least two of the ephemeris information, the ground coverage information, the connection information of the feeder link, and the first indication information, that the first satellite enters the first service area, to improve accuracy. For example, after receiving, at the first moment, the first indication information indicating that the first satellite enters the first service area, the core network element may calculate the location of the first satellite based on the ephemeris information. If a calculation result indicates that a size of the signal coverage of the first satellite for the first service area at the current location reaches the specified threshold, the core network element determines that the first satellite enters the first service area at the first moment. Alternatively, if the core network element calculates, based on the ephemeris information, that a size of the signal coverage of the first satellite for the first service area at the location at the first moment reaches the specified threshold, and determines, at the first moment, that RSRP of the signal received by the gateway from the first satellite reaches the specified threshold, the core network element may determine that the first satellite enters the first service area at the first moment.

Step 602: The core network element sends a connection establishment request message to the satellite-borne apparatus of the first satellite.

The connection establishment request message is used to request to establish a connection between the core network element and the satellite-borne apparatus of the first satellite.

Optionally, in step 603, the satellite-borne apparatus of the first satellite sends a connection establishment response message to the core network element.

The core network element may determine a moment at which the first satellite enters the first service area. For example, the core network element determines, based on the ephemeris information, that the first satellite enters the first service area. If the core network element determines, based on the ephemeris information, that the first satellite enters the first service area at the first moment, the first moment is used as the moment at which the first satellite enters the first service area. For another example, the core network element determines, based on the connection information of the feeder link, that the first satellite enters the first service area. When the core network element determines that the strength of the signal received by the gateway from the first satellite is increasingly strong and reaches the specified threshold, a moment at which the strength of the signal reaches the specified threshold is determined as the moment at which the first satellite enters the first service area. For another example, the core network element determines, based on the first indication information from the first satellite, that the first satellite enters the first service area. When receiving, at the first moment, the first indication information indicating that the first satellite enters the first service area, the core network element determines the first moment as the moment at which the first satellite enters the first service area. Alternatively, if the first indication information indicates information about time (or a time stamp) at which the first satellite enters the first service area, the core network element uses the moment indicated by the time information as the moment at which the first satellite enters the first service area.

For example, the core network element determines that the first satellite enters the first service area at the first moment. In a possible implementation, the core network element may send the connection establishment request message to the satellite-borne apparatus of the first satellite at the first moment. In other words, once the first satellite enters the first service area, the core network element immediately sends the connection establishment request message, to establish the connection with the satellite-borne apparatus of the first satellite as soon as possible.

In another possible implementation, if the first satellite enters the first service area at the first moment, the core network element sends the connection establishment request message to the satellite-borne apparatus of the first satellite after a first delay starting from the first moment. In other words, when the first satellite enters the first service area at the first moment, the core network element does not immediately initiate the connection establishment request message, but sends the connection establishment request message after the first delay. Within the first delay, the first satellite performs uplink and downlink transmission with the gateway to establish the feeder link. After completing the uplink and downlink transmission between the first satellite and the gateway, the core network element may send the connection establishment request message to the satellite-borne apparatus of the first satellite, to ensure connection establishment. Optionally, duration of the first delay may be pre-configured. Optionally, the duration of the first delay may be set based on average time consumed for setting up the feeder link between the satellite and the gateway.

In another possible implementation, when the first satellite enters the first service area, the core network element does not immediately send the connection establishment request message to the satellite-borne apparatus of the first satellite, but sends the connection establishment request message only when the core network element receives a service request. In other words, if the core network element does not receive the service request, the core network element may not send the connection establishment request message. The service request may be from a terminal, or may be from a server. This is not limited. In this implementation, the connection establishment request message is sent only when there is a user service data transmission requirement, to establish the connection between the satellite-borne apparatus and the core network element. This can reduce resource overheads.

In the foregoing procedure, the core network element may obtain IP address information of the satellite-borne apparatus on the first satellite through information about the first satellite (for example, information like a satellite identifier). For example, the information about the first satellite and the IP address information of the satellite-borne apparatus of the first satellite may be pre-configured in the core network element. For another example, the core network element may obtain the IP address information of the satellite-borne apparatus of the first satellite from another network element (for example, a controller in the core network) based on the information about the first satellite.

In embodiments of this application, the connection between the satellite-borne apparatus and the core network element may also be understood as an interface between the satellite-borne apparatus and the core network element. A process of establishing the connection may include: creating an interface, an instance, or a process to a peer end on each of the core network element and the satellite-borne apparatus. The interface, the instance, or the process created on the satellite-borne apparatus includes identification information of the satellite-borne apparatus (for example, one or more of information like an IP address of the satellite-borne apparatus, a device identifier of the satellite-borne apparatus, or an identifier of the first satellite) and identification information of a core network element (for example, one or more of information like an IP address of the core network element or a network element identifier), to identify the connection, in other words, to identify the interface, instance, or process created to the core network element. The interface, instance, or process created on the core network element includes identification information of the core network element and identification information of a satellite-borne apparatus, to identify the connection, in other words, to identify the connection created to the satellite-borne apparatus.

After the core network element establishes the connection with the satellite-borne apparatus of the first satellite, the core network element and the satellite-borne apparatus may detect reachability of the connection by sending heartbeat packets to each other or in another manner, to maintain the connection.

It should be understood that the connection establishment request message may also be referred to as a coupling establishment request message, an association establishment request, a connection establishment request, an interface establishment request, an instance establishment request, a process establishment request, or another name, and is used to establish a connection relationship between two communication network elements. This is not limited in embodiments of this application.

The foregoing step 601 and step 602 may also be understood as follows: When determining that the first satellite enters the first service area, the core network element sends the connection establishment request message to the satellite-borne apparatus of the first satellite; or may also be understood as follows: If receiving the first indication information, the core network element sends the connection establishment request message to the satellite-borne apparatus of the first satellite; or may also be understood as follows: The core network element receives the first indication information, and sends the connection establishment request message to the satellite-borne apparatus of the first satellite based on the first indication information; or may also be understood as follows: When the first satellite enters the first service area, the core network element sends the connection establishment request message to the satellite-borne apparatus of the first satellite. In other words, a trigger condition for the core network element to send the connection establishment request message to the satellite-borne apparatus of the first satellite is that the first satellite enters the first service area.

In a possible implementation, capability negotiation may be performed between the core network element and the satellite-borne apparatus in the connection establishment process. A device, in the core network element and the satellite-borne apparatus, that initiates connection establishment or release when the first satellite enters or leaves the first service area is determined based on whether the core network element and the satellite-borne apparatus each have a capability of determining whether the first satellite enters or leaves the service area. For example, if the core network element has the capability of determining that the first satellite enters or leaves the service area, and the satellite-borne apparatus does not have the capability, the satellite-borne apparatus and the core network element may determine that the core network element sends the connection establishment request message when the first satellite enters the first service area, and the core network element sends a connection release request message when the first satellite leaves the first service area. For another example, if the satellite-borne apparatus has the capability of determining that the first satellite enters or leaves the service area, and the core network element does not have the capability, the satellite-borne apparatus and the core network element may determine that the satellite-borne apparatus sends the connection establishment request message when the first satellite enters the first service area, and sends the connection release request message when the first satellite leaves the first service area. For another example, if both the core network element and the satellite-borne apparatus have the capability of determining that the first satellite enters or leaves the service area, the core network element and the satellite-borne apparatus may determine, through negotiation or according to a default rule, that the core network element sends the connection establishment request message when the first satellite enters the first service area or sends the connection release request message when the first satellite leaves the first service area; or may determine that the satellite-borne apparatus sends the connection establishment request message when the first satellite enters the first service area or sends the connection release request message when the first satellite leaves the first service area. For example, by default, the satellite-borne apparatus initiates a connection establishment or connection release request, or the core network element initiates a connection establishment or connection release request, or a device with a smaller IP address initiates a connection establishment or connection release request.

Optionally, the connection establishment request message sent by the core network element to the satellite-borne apparatus further includes capability information of the core network element. Optionally, the capability information indicates that the core network element has or does not have a capability of determining that a satellite enters or leaves a service area. Optionally, after the core network element sends the connection establishment request message to the satellite-borne apparatus of the first satellite, the satellite-borne apparatus sends the connection establishment response message to the core network element. The connection establishment response message includes capability information of the satellite-borne apparatus. Optionally, the capability information indicates that the satellite-borne apparatus has or does not have a capability of determining that a satellite enters or leaves a service area. In the foregoing manner, the capability negotiation between the core network element and the satellite-borne apparatus may be implemented.

Based on the procedure shown in FIG. 6, when a satellite enters a service area, the core network element initiates a connection establishment process with a satellite-borne apparatus on the satellite. In this way, a connection between the satellite-borne apparatus on the satellite and the core network element can be dynamically managed based on motion of the satellite, a location change of the satellite, or a change of ground coverage information of the satellite.

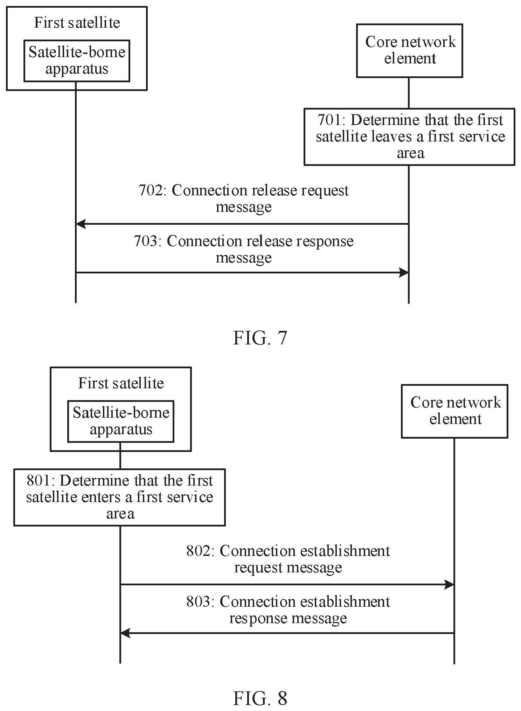

Based on the architecture of the satellite communication system shown in FIG. 2 or FIG. 3, FIG. 7 is a schematic flowchart of a satellite communication method according to an embodiment of this application. The procedure describes a process in which a core network element initiates, when the first satellite leaves a first service area, to release a connection with a satellite-borne apparatus of a first satellite. It should be noted that, the embodiment shown in FIG. 7 may be combined with the embodiment shown in FIG. 6. For example, based on FIG. 6, steps in the embodiment shown in FIG. 7 may be further included, to provide a procedure of establishing and releasing the connection between the satellite-borne apparatus and the core network element. This is not limited in this application.

As shown in FIG. 7, the procedure may include the following steps.

Step 701: The core network element determines that the first satellite leaves the first service area.

In a possible implementation, the core network element may determine, based on ephemeris information, that the first satellite leaves the first service area.

Specifically, because the ephemeris information may be used to locate a location of a satellite at any moment, the core network element may determine (or calculate) a location of the first satellite at a moment based on the ephemeris information. If the first satellite satisfies a leaving condition for leaving the first service area at a location at a first moment, the first satellite leaves the first location area at the first moment. For example, if at a location of the first satellite at a second moment, signal coverage of the first satellite no longer overlaps the first service area or a range of a location area covered by a 1st gateway of the first satellite in the first service area, or an area size or proportion of an overlapping area is reduced to or below a specified threshold, the first satellite leaves the first service area at the second moment or at the location.

In another possible implementation, the core network element may alternatively determine, based on a ground coverage information, whether the first satellite leaves the first service area.

The core network element may determine (or calculate) a location of the first satellite at a moment based on the ground coverage information. For example, when the core network element determines, based on a location of the first satellite at each moment, that the size of the coverage of the first satellite for the first service area gradually decreases, and decreases to or below a specified threshold at the second moment, the core network element may determine that the first satellite leaves the first service area at the second moment.

In another possible implementation, the core network element may alternatively determine, based on connection information of a feeder link between the first satellite and a gateway, that the first satellite leaves the first service area. The core network element may obtain the connection information of the feeder link between the gateway and the first satellite. For example, the core network element may obtain strength or quality information, like RSRP or RSRQ, of a signal received by the gateway in the first service area from the first satellite. As the first satellite moves, strength of a signal received by an egress gateway from the first satellite in the first service area gradually decreases. Correspondingly, if the core network determines that the strength of the signal received by the egress gateway from the first satellite gradually decreases and decreases to or below a specified threshold, the core network may determine that the first satellite leaves the first service area in which the egress gateway is located.

In another possible implementation, the core network element determines, by receiving second indication information from the first satellite (or the satellite-borne apparatus of the first satellite), that the first satellite leaves the first service area.

In an example, the second indication information may indicate that the first satellite leaves the first service area.

It may be understood that step 701 may be replaced with: The core network element receives the second indication information from the first satellite (or the satellite-borne apparatus of the first satellite).

For example, the second indication information may be a bit in a message. If the bit is set to 0, it indicates that the first satellite leaves the first service area. If the bit is set to 1, it indicates that the first satellite enters the first service area.

Specifically, the first satellite performs signal interaction with the egress gateway in the first service area. As the first satellite moves, strength of a signal received by the first satellite from the egress gateway gradually decreases. If the strength of the signal received by the first satellite from the egress gateway gradually decreases and decreases to or below a specified threshold, the first satellite may determine that the first satellite leaves the location area in which the egress gateway is located, and determine that the first satellite leaves the first service area. In this case, the first satellite may send the second indication information to the core network element, to indicate that the first satellite leaves the first service area.

In another example, the second indication information may indicate a location area that the first satellite currently leaves.

Correspondingly, the core network element may determine, based on the location area indicated by the second indication information, whether the first satellite leaves the first service area, or determine whether the location area indicated by the second indication information is a location area covered by the egress gateway of the first satellite in the first service area.

Optionally, the signal sent by the gateway may include information about the gateway (for example, an identifier of the gateway) and/or information about the location area of the gateway and/or the first service area (for example, an identifier or coordinates of the location area and/or an identifier or coordinates of the first service area). Correspondingly, the first satellite may determine, based on the foregoing information, a location area or a service area that the first satellite currently leaves, and send the second indication information to the core network element, to indicate the location area or service area that the first satellite currently leaves. If the core network element determines, based on service area information indicated by the second indication information, that the service area information matches a service providing area range (namely, the first service area) of an operator of the core network, the core network element determines that the first satellite leaves the first service area; or if the core network determines, based on a location area indicated by first indication information, that the location area is a service providing area range (namely, the first service area) of an operator of the core network, and a location area corresponding to location area information indicated by the second indication information is a location area of an egress gateway of the first satellite in the service area, the core network element determines that the first satellite leaves the first service area; or if the core network determines, based on location area information in the second indication information, that the location area information matches a location area of an egress gateway in a service providing area range (namely, the first service area) of an operator of the core network, the core network element determines that the first satellite leaves the first service area.

It should be understood that the core network element may alternatively determine, based on at least two of the ephemeris information, the ground coverage information, the connection information of the feeder link, and the second indication information, whether the first satellite leaves the first service area, to improve accuracy. For example, after receiving, at the second moment, the first indication information indicating that the first satellite leaves the first service area, the core network element may calculate the location of the first satellite based on the ephemeris information. If a calculation result indicates that a size of the signal coverage of the first satellite for the first service area at the current location is less than the specified threshold, the core network element determines that the first satellite leaves the first service area at the second moment; or if the core network element calculates, based on the ephemeris information, that a size of the signal coverage of the first satellite for the first service area at the location at the second moment is less than the threshold, and determines, at the second moment, that the RSRP of the signal received by the gateway from the first satellite is less than the specified threshold, the core network element may determine that the first satellite leaves the first service area at the second moment.

Step 702: The core network element sends a connection release request message to the satellite-borne apparatus of the first satellite. The connection release request message is used to request to release a connection between the core network element and the satellite-borne apparatus of the first satellite.

Optionally, in step 703, the satellite-borne apparatus of the first satellite sends a connection release response message to the core network element.

Similar to that the core network element may determine a moment at which the first satellite enters the first service area, the core network element may also determine a moment at which the first satellite leaves the first service area.

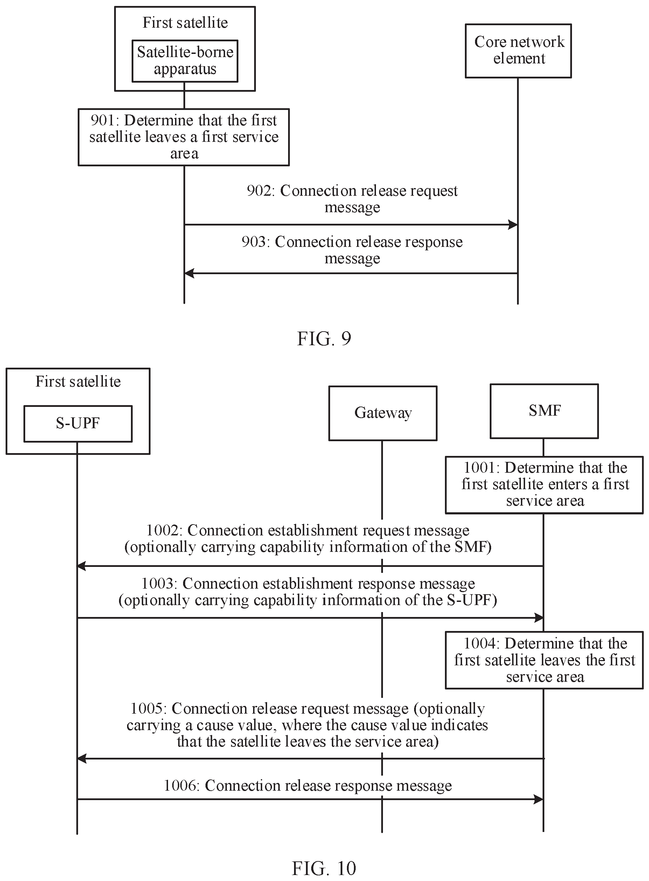

For example, the core network element determines that the first satellite leaves the first service area at the second moment. In a possible implementation, the core network element may send the connection release request message to the satellite-borne apparatus of the first satellite at the second moment. In other words, once the first satellite leaves the first service area, the core network element immediately sends the connection release request message, to release the connection with the satellite-borne apparatus of the first satellite as soon as possible. For an example of the foregoing implementation, refer to a procedure shown in FIG. 10, FIG. 14, or FIG. 16.

In another possible implementation, if the first satellite leaves the first service area at the second moment, the core network element sends the connection release request message to the satellite-borne apparatus of the first satellite after a second delay starting from the second moment. In other words, when the first satellite leaves the first service area at the second moment, the core network element does not immediately initiate the connection release request message, but sends the connection release request message after the second delay, so that a terminal in the first service area can perform transmission via the first satellite as much as possible before the first satellite completely leaves the first service area. Optionally, duration of the second delay may be pre-configured.

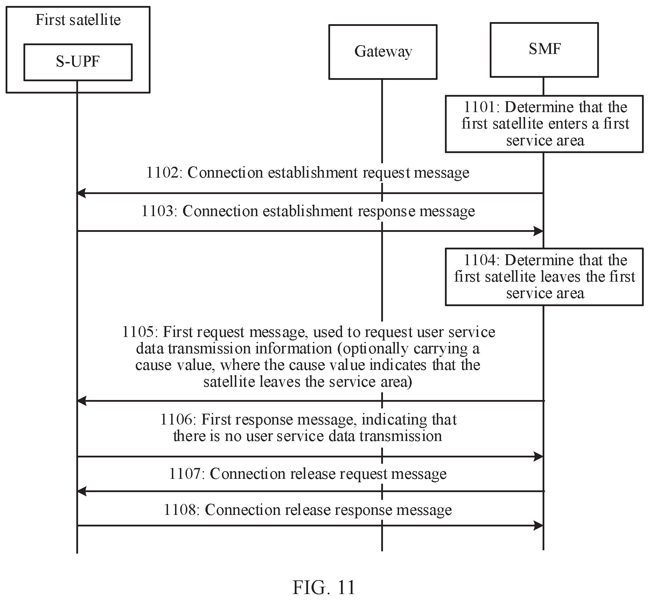

In a possible implementation, before determining that the first satellite leaves the first service area and sending the connection release request message to the satellite-borne apparatus of the first satellite, for example, before specified duration (for example, one minute), the core network may further query whether the satellite-borne apparatus of the first satellite has user service data transmission, and send the connection release request message to the satellite-borne apparatus of the first satellite only when determining that the satellite-borne apparatus of the first satellite has no user service data transmission, to ensure transmission of user service data. Specifically, in an implementation, when the first satellite leaves the first service area, the core network element sends a first request message to the satellite-borne apparatus of the first satellite. The first request message is used to request service data transmission information of the satellite-borne apparatus. For example, the service data transmission information may be "whether there is user service data transmission", or may be "information about a user with service data transmission." This is not limited. In other words, whether the satellite-borne apparatus has user service data transmission may be queried through the first request message. After receiving the first request message, the satellite-borne apparatus of the first satellite sends a first response message to the core network element. The first response message includes user service data transmission information of the satellite-borne apparatus. For example, the first response message indicates that the satellite-borne apparatus has user service data transmission or has no user service data transmission. After receiving the first response message, the core network element sends the connection release request message to the satellite-borne apparatus based on the first response message. For example, if the core network element determines, based on the first response message, that the satellite-borne apparatus has no user service data transmission, the core network element sends the connection release request message to the satellite-borne apparatus. For an example of the foregoing implementation, refer to a procedure shown in FIG. 11.

Optionally, if the core network element determines, based on the first response message, that the satellite-borne apparatus has user service data transmission, the core network element may send the first request message to the satellite-borne apparatus again after the specified duration, and so on, until the core network element determines, based on a received first response message, that the satellite-borne apparatus has no user service data transmission, stops sending the first request message, and sends the connection release request message to the satellite-borne apparatus.

It should be understood that a maximum quantity N (N is a positive integer greater than or equal to 1) of sending times of the first request message may be set. If the first response message received by the core network element after the core network element sends the first request message for an $N^{th}$ time still indicates that the satellite-borne apparatus has user service data transmission, the core network element sends the connection release request message to the satellite-borne apparatus.

Optionally, a first message may include a cause value, and the cause value indicates that the satellite leaves the service area. The first satellite may determine, based on the cause value, a cause for initiating connection release by the core network, so that the first satellite can perform a corresponding operation based on the cause. For example, the first satellite may not retain the connection between the first satellite and the core network element, to reduce power consumption.

Optionally, the first response message may include first information, and the first information indicates that the satellite-borne apparatus has user data transmission or has no user data transmission. Correspondingly, the core network element may determine, based on the first information, whether the satellite-borne apparatus has user service data transmission.

An example of the first information is as follows: The first information is indication information whose value is a first value or a second value. When the value of the first information is the first value, it indicates that there is no user service data transmission. When the value of the first information is the second value, it indicates that there is user service data transmission.

Another example of the first information is as follows: The first information includes information about a user to which user service data belongs (for example, a user identifier) and/or information about a session to which the user service data belongs (for example, a session identifier). In other words, if the first response message includes the information about the user to which the user service data belongs or the information about the session to which the user service data belongs, it indicates that the satellite-borne apparatus has user service data transmission, and indicates, through the first information, the user or the session to which the user service data belongs.

Another example of the first information is as follows: The first information includes indication information of a second value and information about a user to which user service data belongs (for example, a user identifier) and/or information about a session to which the user service data belongs (for example, a session identifier). In other words, when the satellite-borne apparatus has user service data transmission, the satellite-borne apparatus may send the first information to indicate that there is the user service data transmission, and indicate a user or a session to which the user service data belongs.

In a possible implementation, if the core network element determines, based on the first response message, that the satellite-borne apparatus has user service data transmission, and learns, based on the first information in the first response message, a user and/or a session to which the user service data belongs, the core network element may determine, based on a classification of the user and/or a classification of the session, whether to release the connection (that is, determine whether to send the connection release request message). For example, if the classification of the user indicates that the user is an important user or a high-level user, and data of the session is determined as high-priority data based on the classification of the session, the connection release request message may not be sent. Optionally, the connection relationship may be maintained through path forwarding between satellites. Otherwise, the connection release request message may be sent.

Before or after the core network element sends the connection release request message to the satellite-borne apparatus of the first satellite, or when the core network element sends the connection release request message, the core network element performs a connection release process, and the satellite-borne apparatus performs a connection release process after receiving the connection release request. The connection between the satellite-borne apparatus and the core network element may also be understood as an interface between the satellite-borne apparatus and the core network element; or may also be understood as that an interface for communicating with a peer end is created on the satellite-borne apparatus and the core network element; or may also be understood as that an instance for communicating with a peer end is created on the satellite-borne apparatus and the core network element; or may also be understood as that a process for communicating with a peer end is created on the satellite-borne apparatus and the core network element. Correspondingly, a process of releasing the connection may include: deleting, disabling, or shutting down, on the satellite-borne apparatus, the interface, the instance, or the process connected to the core network element; and deleting, disabling, or shutting down, on the core network element, the interface, the instance, or the process connected to the satellite-borne apparatus. An operation of releasing the connection may further include stopping detecting reachability of the connection.

For example, the core network element stops sending a heartbeat packet to the satellite-borne apparatus of the first satellite, and the satellite-borne apparatus stops sending a heartbeat packet to the core network element.

It should be understood that the connection release request message in the foregoing procedure may also be referred to as a coupling release request message, a coupling delete request message, an association release request message, a connection release request message, an association delete request, a connection delete request, an interface delete request, an instance delete request, a process delete/release request, an interface shutdown request, an instance disabling establishment request, a process disabling establishment request, or another name. The first request message in the foregoing procedure may also be referred to as a report request (report request) message. Correspondingly, the first response message may also be referred to as a report response (report response) message. This is not limited in embodiments of this application.

The foregoing step 701 and step 702 may alternatively be understood as follows: When determining that the first satellite leaves the first service area, the core network element sends the connection release request message to the satellite-borne apparatus of the first satellite; or may be understood as follows: If receiving the second indication information from the satellite-borne apparatus of the first satellite, the core network element sends the connection release request message to the satellite-borne apparatus of the first satellite; or may be understood as follows: The core network element sends the connection release request message to the satellite-borne apparatus of the first satellite when the first satellite leaves the first service area; or may be understood as follows: The core network element receives the second indication information from the satellite-borne apparatus of the first satellite, and the core network element sends the connection release request message to the satellite-borne apparatus of the first satellite based on the second indication information. In other words, a trigger condition for the core network element to send the connection release request message to the satellite-borne apparatus of the first satellite is that the first satellite leaves the first service area, or the core network element determines that the first satellite leaves the first service area.

In a possible implementation, an implementation in which the satellite-borne apparatus releases the connection with the core network element is as follows: The satellite-borne apparatus is powered off, or the satellite-borne apparatus disables (or disconnects) a connection with a power supply module or a power supply. After the satellite-borne apparatus is powered off, cached connection information (for example, an interface, an instance, a process, or context information, or peer address information) is no longer saved, and sending of the heartbeat packet to the core network element is stopped. In other words, the connection between the satellite-borne apparatus and the core network element may be released by powering off the satellite-borne apparatus. In another possible implementation, the satellite-borne apparatus may be powered off after deleting related information (for example, an interface, an instance, a process, or context information, or peer address information) of the connection and/or stopping sending the heartbeat packet. Power consumption can be reduced by powering off the satellite-borne apparatus.

Correspondingly, when or before the first satellite enters the first service area again, the satellite-borne apparatus is powered on, to establish a connection with the core network element. Optionally, after being powered off, the satellite-borne apparatus may be powered on again after a third delay. Optionally, duration of the third delay may be pre-configured. The duration of the third delay may be set based on duration from a moment at which the first satellite leaves the first service area to a moment at which the first satellite enters the first service area again.

Based on the method shown in FIG. 7, when the first satellite leaves the first service area, the core network element may initiate a process of releasing the connection with the satellite-borne apparatus on the first satellite. In this way, the connection between the satellite-borne apparatus on the satellite and the core network element can be dynamically managed based on motion of the satellite or a location change of the satellite.

With reference to FIG. 7, this application further provides another embodiment based on FIG. 7. Step 702 in this embodiment may be replaced with: The core network element indicates the satellite-borne apparatus of the first satellite to retain the connection but stops detecting the reachability of the connection.

It should be noted that step 701 and step 702 in this embodiment may alternatively be replaced with: When the core network determines that the first satellite leaves the first service area, or when the first satellite leaves the first service area, the core network element indicates the satellite-borne apparatus of the first satellite to retain the connection but stop detecting the reachability of the connection.

According to the method provided in this embodiment, network overheads can be reduced. In addition, after the first satellite enters the first service area again, the connection between the satellite-borne apparatus of the first satellite and the core network element can be quickly reestablished or restored.

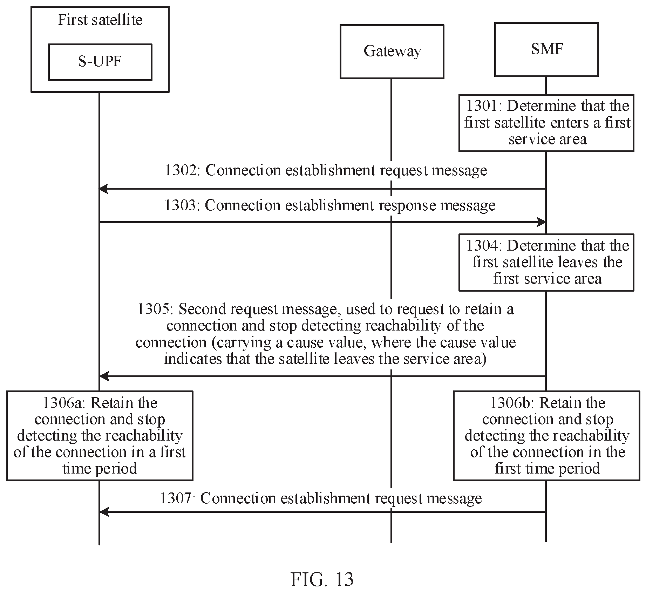

Specifically, in an implementation, when the first satellite leaves the first service area, the core network element sends a second request message to the satellite-borne apparatus. The second request message is used to request the satellite-borne apparatus to retain the connection or the interface between the satellite-borne apparatus and the core network element and stop detecting the reachability of the connection. Correspondingly, after receiving the second request message, the satellite-borne apparatus retains the connection, and stops detecting the reachability of the connection. Correspondingly, the core network element also retains the connection or the interface, and stops detecting the reachability of the connection. For an example of the foregoing implementation, refer to a procedure shown in FIG. 13.

For example, retaining the connection may include: retaining the interface of the connection on the device, the instance of the connection, the process of the connection, a node context, or user context information; and stopping detecting the reachability of the connection includes: stopping, on the core network element, sending a packet (for example, a heartbeat packet) used to detect the reachability of the connection with the satellite-borne apparatus of the first satellite, and stopping, on the satellite-borne apparatus, sending a packet used to detect the reachability of the connection with the core network element.

In a possible implementation, the core network element may retain the connection and stop detecting the reachability of the connection in a first time period. The first time period is a time period from the second moment (namely, the moment at which the first satellite leaves the first service area) to a third moment (the third moment is a moment at which the first satellite enters the first service area again). Correspondingly, when the first satellite enters the first service area again, the core network element may re-establish the connection, and/or re-start to detect the reachability of the connection. For example, a timer may be started when the first satellite leaves the first service area. Duration of the timer is duration of the first time period. During running of the timer, detection of the reachability of the connection is stopped. When the timer expires, detection of the reachability of the connection is resumed. In the foregoing implementation, because the core network element and the satellite-borne apparatus of the first satellite retain the connection (for example, retain a context of the connection), when the first satellite enters the first service area again, the connection may be quickly restored based on the context of the retained connection, and sending of a heartbeat packet may be resumed.

In another possible implementation, the core network element may retain the connection and stop detecting the reachability of the connection in a second time period. The second time period is a time period from the second moment (namely, the moment at which the first satellite leaves the first service area) to a fourth moment. The fourth moment is before the third moment. Correspondingly, before the first satellite enters the first service area again, the core network element may re-establish the connection, and/or re-start to detect the reachability of the connection, to ensure that the connection is restored when the first satellite enters the first service area again.

Optionally, the second request message may include a cause value, and the cause value indicates that the satellite leaves the service area.

With reference to FIG. 7, this application further provides another embodiment based on FIG. 7. Step 702 in this embodiment may be replaced with: The core network element indicates the satellite-borne apparatus of the first satellite to initiate connection release when there is no user service data transmission.

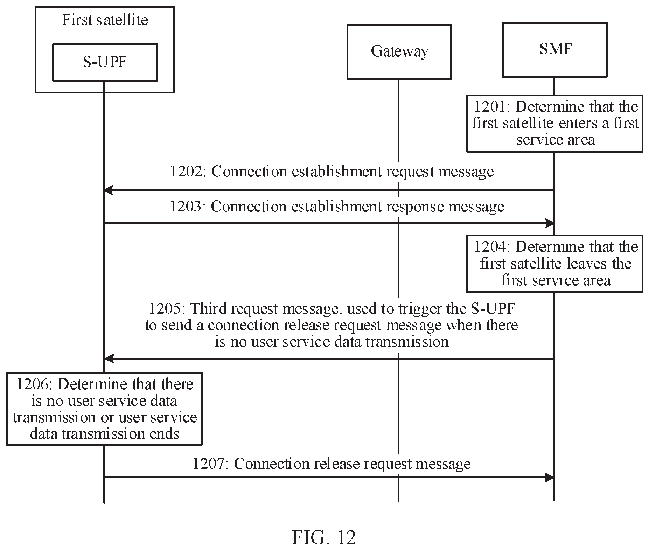

Specifically, when the first satellite leaves the first service area, the core network element sends a third request message to the satellite-borne apparatus of the first satellite. The third request message is used to trigger the satellite-borne apparatus to send a connection release request message when there is no user service data transmission, and the connection release request message is used to request to release the connection between the core network element and the satellite-borne apparatus. Correspondingly, after receiving the third request message, if the satellite-borne apparatus has no user service data transmission, the satellite-borne apparatus sends the connection release request message to the core network element, to request to release the connection; or if the satellite-borne apparatus has user service data transmission, the satellite-borne apparatus may send the connection release request message to the core network element after the user service data transmission ends. Correspondingly, after receiving the connection release request message from the satellite-borne apparatus, the core network element releases the connection based on the connection release request message. In the foregoing implementation, the satellite-borne apparatus of the first satellite may initiate connection release when there is no user service data transmission, or after user service data transmission ends, to ensure transmission of the user service data. For an example of the foregoing implementation, refer to a procedure shown in FIG. 12.

It should be noted that step 701 and step 702 in this embodiment may alternatively be replaced with: When the core network determines that the first satellite leaves the first service area, or when the first satellite leaves the first service area, the core network element sends the third request message to the satellite-borne apparatus of the first satellite.

In a possible implementation, step 701 and step 702 may be replaced with: The core network element receives the connection release request message from the satellite-borne apparatus of the first satellite, and releases the connection based on the connection release request message.

The connection release request message may be used to request or indicate to release the connection between the satellite-borne apparatus and the core network element.

In other words, the connection release is initiated by the satellite-borne apparatus of the first satellite.

Correspondingly, the method further includes: The satellite-borne apparatus of the first satellite sends the connection release request message to the core network element.

Optionally, when determining, based on at least one of the ephemeris information, the ground coverage information, or the connection information of the feeder link, that the first satellite leaves the first service area, the satellite-borne apparatus of the first satellite sends the connection release request message to the core network element. A specific implementation in which the satellite-borne apparatus determines, based on at least one of the ephemeris information, the ground coverage information, or the connection information of the feeder link, that the first satellite leaves the first service area is basically the same as an implementation in which the core network element determines, based on at least one of the ephemeris information, the ground coverage information, or the connection information of the feeder link, that the first satellite leaves the first service area.

Optionally, the satellite-borne apparatus of the first satellite and the core network element may perform capability negotiation in a process of establishing the connection (for an implementation process of the capability negotiation, refer to related content in FIG. 6). If the satellite-borne apparatus of the first satellite has a capability of determining, based on information like the ephemeris information, the ground coverage information, or the connection information of the feeder link, that the first satellite leaves the first service area, it may be determined, through negotiation, that the satellite-borne apparatus initiates the connection release request message when the first satellite leaves the first service area.

Based on the architecture of the satellite communication system shown in FIG. 2 or FIG. 3, FIG. 8 is a schematic flowchart of a satellite communication method according to an embodiment of this application. The procedure describes a process in which a satellite-borne apparatus initiates, when sensing that a first satellite enters a first service area, to establish a connection with a core network element.

As shown in FIG. 8, the procedure may include the following steps.

Step 801: The satellite-borne apparatus of the first satellite determines that the first satellite enters the first service area.

Step 802: The satellite-borne apparatus of the first satellite sends a connection establishment request message to the core network element. The connection establishment request message is used to request to establish a connection between the satellite-borne apparatus and the core network element.

Optionally, in step 803, the core network element sends a connection establishment response message to the satellite-borne apparatus of the first satellite.

In the procedure shown in FIG. 8, in step 801, an implementation in which the satellite-borne apparatus determines that the first satellite enters the first service area is basically the same as an implementation in which the core network element determines that the first satellite enters the first service area. In step 802, an implementation process in which the satellite-borne apparatus sends the connection establishment request message to establish the connection between the satellite-borne apparatus and the core network element is basically the same as an implementation process in which the core network element sends the connection establishment request message and establishes the connection between the core network element and the satellite-borne apparatus. For details, refer to the related descriptions in the embodiment shown in FIG. 6 or FIG. 7. Details are not described again.

In a possible implementation, at a first moment, the satellite-borne apparatus of the first satellite adjusts a beam direction to cover an ingress gateway of the first service area, and determines that the first satellite enters the first service area at the moment when air interface communication can be performed with the gateway.

After the satellite-borne apparatus establishes the connection with the core network element, the satellite-borne apparatus and the core network element may send heartbeat packets to each other or in another manner, to detect reachability of the connection, to maintain the connection.

It should be understood that the connection establishment request message in the foregoing procedure may also be referred to as a coupling establishment request message or another name. This is not limited in embodiments of this application.

The foregoing step 801 and step 802 may also be understood as follows: When determining that the first satellite enters the first service area, the satellite-borne apparatus sends the connection establishment request message to the core network element; or may also be understood as follows: If determining that the first satellite enters the first service area, the satellite-borne apparatus sends the connection establishment request message to the core network element; or may also be understood as follows: When the first satellite enters the first service area, the satellite-borne apparatus sends the connection establishment request message to the satellite-borne apparatus of the first satellite. In other words, a trigger condition for the satellite-borne apparatus to send the connection establishment request message to the core network element is that the first satellite enters the first service area, or the satellite-borne apparatus determines that the first satellite enters the first service area.

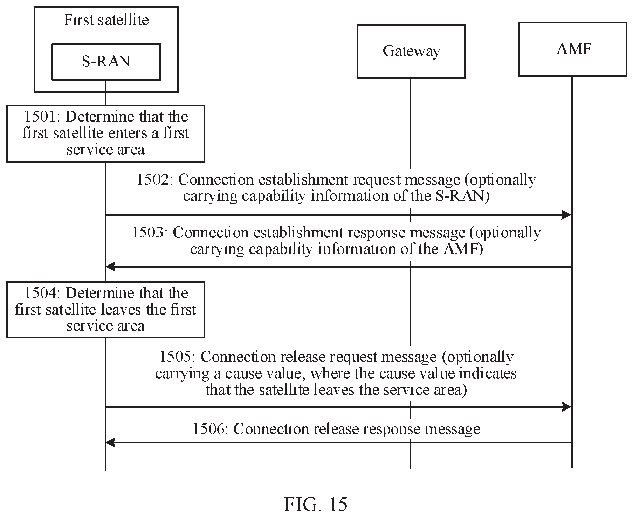

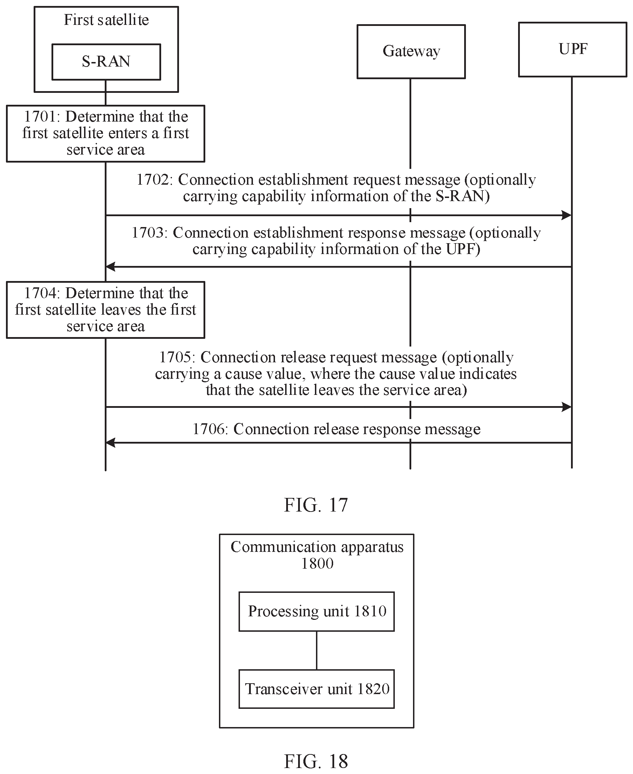

For an example of the foregoing implementation, refer to a procedure shown in FIG. 15 or FIG. 17.

Based on the procedure shown in FIG. 8, when determining that a satellite enters a service area, a satellite-borne apparatus may initiate a process of establishing a connection with the core network element. In this way, the connection between the satellite-borne apparatus on the satellite and the core network element can be dynamically managed based on motion of the satellite or a location change of the satellite.

Based on the architecture of the satellite communication system shown in FIG. 2 or FIG. 3, FIG. 9 is a schematic flowchart of a satellite communication method according to an embodiment of this application. The procedure describes a process in which a satellite-borne apparatus initiates, when sensing that a first satellite leaves a first service area, to release a connection with a core network element.

As shown in FIG. 9, the procedure may include the following steps.

Step 901: The satellite-borne apparatus of the first satellite determines that the first satellite leaves the first service area.

An implementation in which the satellite-borne apparatus determines that the first satellite leaves the first service area is basically the same as an implementation in which the core network element determines that the first satellite leaves the first service area.

Step 902: The satellite-borne apparatus of the first satellite sends a connection release request message to the core network element. The connection release request message is used to request to release a connection between the satellite-borne apparatus and the core network element.

Optionally, in step 903, the satellite-borne apparatus of the first satellite sends a connection release response message to the core network element.

Similar to that the core network element may determine a moment at which the first satellite leaves the first service area, the satellite-borne apparatus may also determine a moment at which the first satellite leaves the first service area.

For example, the satellite-borne apparatus determines that the first satellite leaves the first service area at a second moment. In a possible implementation, the satellite-borne apparatus may send the connection release request message to the core network element at the second moment. In other words, once the first satellite leaves the first service area, the satellite-borne apparatus immediately sends the connection release request message, to release the connection with the core network element as soon as possible.

In another possible implementation, if the first satellite leaves the first service area at the second moment, the satellite-borne apparatus sends first indication information to the core network before the second moment, to indicate that the first satellite leaves the first service area. Then, the connection release request message is sent to the core network element at the second moment. In other words, when determining that the first satellite leaves the first service area at the second moment, the satellite-borne apparatus does not immediately initiate the connection release request message, but notifies the core network element that the first satellite leaves the first service area, that is, notifies the core network element in advance before the first satellite leaves the first service area. In this way, the core network element may detect whether user service data is being transmitted. If there is no user service data transmission, the core network element may release the connection after receiving the connection release request message sent by the satellite-borne apparatus. If there is user service data transmission, user information of the first satellite may be published to a second satellite (the second satellite is a next satellite that replaces the first satellite to cover the first service area), and the second satellite may be notified of a case in which the first satellite is to be switched at the second moment. Optionally, the core network element may further send indication information to a target terminal corresponding to the user service data transmission, to indicate that the first satellite is about to leave a service range. If no satellite can replace the first satellite to provide a service, the service provided for the terminal is about to be interrupted. If there is an alternative satellite or an inter-satellite link, data may be transmitted through the alternative satellite or the inter-satellite link. In this case, the connection between the satellite-borne apparatus of the first satellite and the core network element is released or deleted after transmission of the user data is completed.

With reference to FIG. 9, this application further provides another embodiment based on FIG. 9. Step 902 in this embodiment may be replaced with: The satellite-borne apparatus requests the core network element to retain the connection, but stops detecting reachability of the connection, for example, shuts down an interface corresponding to the connection, to reduce network overheads. After the first satellite enters the first service area again, the connection between the satellite-borne apparatus and the core network element can be quickly restored or reestablished, or the interface corresponding to the connection cannot be shut down. Specifically, in an implementation, when the first satellite leaves the first service area, the satellite-borne apparatus sends a fourth request message to the core network element. The fourth request message is used to request the core network element to retain the connection between the satellite-borne apparatus and the core network element and stop detecting the reachability of the connection. Correspondingly, after receiving the fourth request message, the core network element retains the connection, and stops detecting the reachability of the connection. Correspondingly, the satellite-borne apparatus also retains the connection, and stops detecting the reachability of the connection.

For example, retaining the connection may include: retaining an interface, an instance, or a process of the connection on the device, a node context, or user context information; and stopping detecting the reachability of the connection includes: stopping, on the core network element, sending a heartbeat packet to the satellite-borne apparatus of the first satellite, and stopping, on the satellite-borne apparatus, sending a heartbeat packet to the core network element.

Optionally, the satellite-borne apparatus may retain the connection and stop detecting the reachability of the connection in a first time period. The first duration is a time period from the second moment (namely, the moment at which the first satellite leaves the first service area) to a moment at which the first satellite enters the first service area again. Correspondingly, when the first satellite enters the first service area again, the satellite-borne apparatus may re-establish the connection, and/or re-start to detect the reachability of the connection. In the foregoing implementation, because the core network element and the satellite-borne apparatus of the first satellite retain the connection (for example, retain a context of the connection), when the first satellite enters the first service area again, the connection may be quickly restored based on the context of the retained connection, and sending of a heartbeat packet may be resumed.

Optionally, the fourth request message may include a cause value, and the cause value indicates that the satellite leaves the service area.

It should be understood that the connection release request message in the foregoing procedure may also be referred to as a coupling release request message or another name. This is not limited in embodiments of this application.

The foregoing step 901 and step 902 may also be understood as follows: When determining that the first satellite leaves the first service area, the satellite-borne apparatus sends the connection release request message to the core network element; or may be understood as follows: If determining that the first satellite leaves the first service area, the satellite-borne apparatus sends the connection release request message to the core network element; or may be understood as follows: When the first satellite leaves the first service area, the satellite-borne apparatus sends the connection release request message to the core network element. In other words, a trigger condition for the satellite-borne apparatus to send the connection release request message to the core network element is that the first satellite leaves a service area in which a first operator can provide a service, or the satellite-borne apparatus determines that the first satellite leaves a last location area in the service area.

In a possible implementation, an implementation in which the satellite-borne apparatus releases the connection with the core network element is as follows: The satellite-borne apparatus is powered off, or the satellite-borne apparatus disables (or disconnects) a connection with a power supply module or a power supply. After the satellite-borne apparatus is powered off, cached connection information (for example, context information or peer address information) is no longer saved, and sending of the heartbeat packet to the core network element is stopped. In other words, the connection between the satellite-borne apparatus and the core network element may be released by powering off the satellite-borne apparatus. In another possible implementation, the satellite-borne apparatus may be powered off after deleting related information (for example, context information or peer address information) of the connection and/or stopping sending the heartbeat packet. Power consumption can be reduced by powering off the satellite-borne apparatus.

Correspondingly, when or before the first satellite enters the first service area again, the satellite-borne apparatus is powered on, to establish a connection with the core network element. Optionally, after being powered off, the satellite-borne apparatus may be powered on again after a third delay. Optionally, duration of the third delay may be pre-configured. The duration of the third delay may be set based on duration from a moment at which the first satellite leaves the first service area to a moment at which the first satellite enters the first service area again.

For an example of the foregoing implementation, refer to a procedure shown in FIG. 15 or FIG. 17.

Based on the procedure shown in FIG. 9, when a satellite leaves a service area, a satellite-borne apparatus may initiate a process of releasing a connection with a satellite-borne apparatus of the core network element. In this way, the connection between the satellite-borne apparatus on the satellite and the core network element can be dynamically managed based on motion of the satellite or a location change of the satellite.

The methods shown in FIG. 6, FIG. 7, FIG. 8, and FIG. 9 may be combined with each other, to establish a connection between the satellite-borne apparatus of the first satellite and the core network element when the first satellite enters the first service area, and release the connection between the satellite-borne apparatus and the core network element when the first satellite leaves the first service area. For example, in an implementation, the methods shown in FIG. 6 and FIG. 7 are combined, that is, the core network element initiates a connection establishment and release process. In another implementation, the methods shown in FIG. 6 and FIG. 9 are combined, that is, the core network element initiates a connection establishment process, and the satellite-borne apparatus initiates a connection release process. In another implementation, the method shown in FIG. 8 is combined with the method shown in FIG. 9, that is, the satellite-borne apparatus initiates a connection establishment process, and the core network element initiates a connection release process. In another possible implementation, the method shown in FIG. 8 is combined with the method shown in FIG. 9, that is, the satellite-borne apparatus initiates a connection establishment and release process.

The procedures shown in FIG. 6, FIG. 7, FIG. 8, and FIG. 9 may be used for an N4 interface establishment or release process. Correspondingly, the core network element in FIG. 6, FIG. 7, FIG. 8, and FIG. 9 is a session management function entity (for example, an SMF), and the satellite-borne apparatus of the first satellite is a satellite-borne user plane function entity (for example, an S-UPF, namely, a satellite-borne UPF, a spaceborne UPF, or an on board UPF) of the first satellite. Based on the system architecture shown in FIG. 2, the following describes several examples of an N4 interface establishment/release procedure with reference to FIG. 10, FIG. 11, FIG. 12, or FIG. 13. It should be understood that FIG. 10, FIG. 11, FIG. 12, or FIG. 13 is merely several possible examples. This application is not limited thereto.

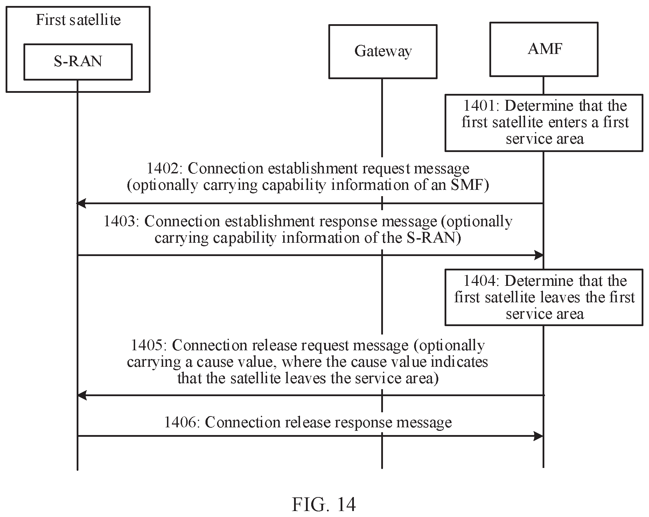

The procedures shown in FIG. 6, FIG. 7, FIG. 8, and FIG. 9 may be used for an N2 interface establishment or release process. Correspondingly, the core network element in FIG. 6, FIG. 7, FIG. 8, and FIG. 9 is an access and mobility management function entity (for example, an AMF), and the satellite-borne apparatus of the first satellite is a satellite-borne radio access network device (for example, an S-RAN) of the first satellite. Based on the system architecture shown in FIG. 2 or FIG. 3, the following describes several examples of an N2 interface establishment/release procedure with reference to FIG. 14 or FIG. 15. It should be understood that FIG. 14 or FIG. 15 is merely several possible examples. This application is not limited thereto.

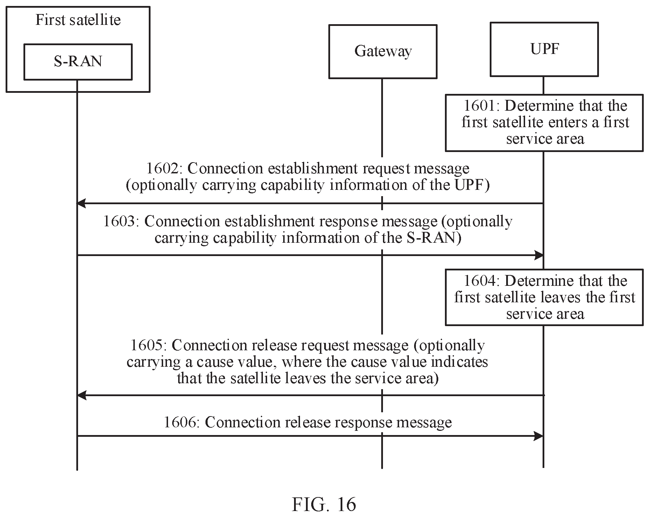

The procedures shown in FIG. 6, FIG. 7, FIG. 8, and FIG. 9 may be used for an N3 interface establishment or release process. Correspondingly, the core network element in FIG. 6, FIG. 7, FIG. 8, and FIG. 9 is a user plane function entity (for example, a UPF), and the satellite-borne apparatus of the first satellite is a satellite-borne radio access network device (for example, an S-RAN) of the first satellite. Based on the system architecture shown FIG. 3, the following describes several examples of an N3 interface establishment/release procedure with reference to FIG. 16 or FIG. 17. It should be understood that FIG. 16 or FIG. 17 is merely several possible examples. This application is not limited thereto.

Based on the system structure shown in FIG. 2, FIG. 10 shows an N4 interface establishment and release procedure. In this procedure, an example in which a core network element is an SMF and a satellite-borne apparatus is an S-UPF is used for description.

As shown in FIG. 10, the procedure includes the following steps.

Step 1001: The SMF determines that a first satellite enters a first service area.

The SMF may determine, based on one or more of ephemeris information, ground coverage information, connection information of a feeder link, and first indication information from the S-UPF, that the first satellite enters the first service area. For a specific implementation, refer to the foregoing related content.

Step 1002: When determining that the first satellite enters the first service area, the SMF sends a connection establishment request message to the S-UPF of the first satellite.

Optionally, the connection establishment request message may carry capability information of the SMF. The capability information indicates whether the SMF has a capability of determining, based on one or more of the ephemeris information, the ground coverage information, the connection information of the feeder link, and the first indication information from the S-UPF, whether the first satellite enters the service area.

Optionally, before, after, or when the connection establishment request message is sent, an interface, an instance, or a process is created on the SMF, to indicate that the SMF is connected to the S-UPF of the first satellite.

Step 1003: After receiving the connection establishment request message, the S-UPF establishes a connection with the SMF, and sends a connection establishment response message to the SMF, to indicate that the connection is successfully established. Correspondingly, the SMF receives the connection establishment response message, and the connection is successfully established.

Optionally, the connection establishment response message may carry capability information of the S-UPF. The capability information indicates whether the S-UPF has a capability of determining, based on one or more of the ephemeris information, the ground coverage information, the connection information of the feeder link, and the first indication information from the S-UPF, whether the first satellite enters the service area.

Optionally, after the connection establishment request message is received, an interface, an instance, or a process is created on the S-UPF, to indicate that the S-UPF is connected to the SMF based on the interface.

Then, uplink and downlink transmission can be performed between the SMF and the S-UPF through the connection.

Step 1004: The SMF determines that the first satellite leaves the first service area.

The SMF may determine, based on one or more of the ephemeris information, the ground coverage information, the connection information of the feeder link, and second indication information from the S-UPF, that the first satellite leaves the first service area. For a specific implementation, refer to the foregoing related content.

Step 1005: When determining that the first satellite leaves the first service area, the SMF sends a connection release request message to the S-UPF of the first satellite.

Optionally, the connection release request message carries a cause value, and the cause value indicates that the satellite leaves the service area.

Optionally, before or after the connection release request message is sent, or when the connection establishment request message is sent, the created interface is deleted from the SMF or the interface is shut down, indicating that the connection with the S-UPF of the first satellite is deleted or suspended.

Step 1006: After receiving the connection release request message, the S-UPF releases the connection with the SMF, and sends a connection release response message to the SMF.

Optionally, after the connection release request message is received, the created interface is deleted from the S-UPF or the interface is shut down, indicating that the connection with the SMF of the first satellite is deleted or suspended.

Correspondingly, the SMF receives the connection release response message, and the connection is successfully released.

Optionally, after the connection is successfully released, the created interface is deleted from the SMF or the S-UPF or the interface is shut down, indicating that the connection with the peer end is deleted or suspended.

For specific implementations of the steps in the procedure shown in FIG. 10, refer to the related descriptions in FIG. 6 and FIG. 7. Details are not described herein again.

A process in which the S-UPF initiates connection establishment when determining that the first satellite enters the first service area is similar to the procedure shown in FIG. 10. Details are not described herein again.

It should be understood that, based on FIG. 10, in a possible manner, the steps of determining that the first satellite enters the first service area and sending the connection establishment request message may be performed on the S-UPF. In other words, the S-UPF may initiate a connection establishment process, and the SMF may initiate a connection release process.

It should be understood that, based on FIG. 10, in another possible implementation, the steps of determining that the first satellite leaves the first service area and sending the connection release request message may be performed on the S-UPF. In other words, the SMF may initiate a connection establishment process, and the S-UPF may initiate a connection release process.

Based on the system architecture shown in FIG. 2, FIG. 11 shows another N4 interface establishment and release procedure. In this procedure, an example in which a core network element is an SMF and a satellite-borne apparatus is an S-UPF is used for description.

As shown in FIG. 11, the procedure includes the following steps.

Step 1101 to step 1103: When a first satellite enters a first service area, the SMF establishes a connection with the S-UPF. For the process, refer to the related procedure in FIG. 10.

Step 1104: The SMF determines that the first satellite leaves the first service area. For the process, refer to the related procedure in FIG. 10.

Step 1105: When determining that the first satellite leaves the first service area, the SMF sends a first request message to the S-UPF of the first satellite, to request user service data transmission information of the satellite-borne apparatus.

Optionally, a connection release request message carries a cause value, and the cause value indicates that the satellite leaves the service area.

Step 1106: After receiving the first request message, the S-UPF sends a first response message to the SMF. The first response message indicates whether the S-UPF has user service data transmission.

Step 1107: After receiving the first response message, if determining, based on the first response message, that the S-UPF has no user service data transmission, the SMF sends the connection release request message to the S-UPF.

Step 1108: After receiving the connection release request message, the S-UPF releases the connection with the SMF, and sends a connection release response message to the SMF. Correspondingly, the SMF receives the connection release response message, and the connection is successfully released.

In step 1106, if the S-UPF determines that there is user service data transmission, the first response message indicates that the S-UPF has user service data transmission. Correspondingly, in step 1107, if the SMF determines, based on the first response message, that the S-UPF has user service data transmission, the SMF may perform step 1105 again after a period of time until the SMF determines, based on a first response message from the S-UPF, that the S-UPF has no user service data transmission, or until a maximum quantity of sending times is reached.

For specific implementations of the steps in the procedure shown in FIG. 11, refer to the related descriptions in FIG. 6 and FIG. 7. Details are not described herein again.

A process in which the S-UPF initiates connection establishment when determining that the first satellite enters the first service area and initiates connection release when determining that the first satellite leaves the first location area is similar to the procedure shown in FIG. 11. A difference lies in that when determining that the first satellite leaves the first service area, the S-UPF sends a connection release request message to the SMF when determining that there is no user service data transmission, or sends a connection release request message to the SMF after user service data transmission ends.

It should be understood that, based on FIG. 11, in a possible manner, the steps of determining that the first satellite enters the first service area and sending the connection establishment request message may be performed on the S-UPF. In other words, the S-UPF may initiate a connection establishment process, and the SMF may initiate a connection release process.

It should be understood that, based on FIG. 11, in another possible implementation, the steps of determining that the first satellite leaves the first service area and sending the connection release request message may be performed on the S-UPF. In other words, the SMF may initiate a connection establishment process, and the S-UPF may initiate a connection release process. Similar to the procedure shown in FIG. 11, a difference lies in that when determining that the first satellite leaves the first service area, the S-UPF sends a connection release request message to the SMF when determining that there is no user service data transmission, or sends a connection release request message to the SMF after user service data transmission ends.

Based on the system architecture shown in FIG. 2, FIG. 12 shows another N4 interface establishment and release procedure. In this procedure, an example in which a core network element is an SMF and a satellite-borne apparatus is an S-UPF is used for description.

As shown in FIG. 12, the procedure includes the following steps.

Step 1201 to step 1203: When a first satellite enters a first service area, the SMF establishes a connection with the S-UPF. For the process, refer to the related procedure in FIG. 10.

Step 1204: The SMF determines that the first satellite leaves the first service area. For the process, refer to the related procedure in FIG. 10.

Step 1205: When determining that the first satellite leaves the first service area, the SMF sends a third request message to the S-UPF, to trigger (or indicate) the S-UPF to send a connection release request message when there is no user service data transmission or after user service data transmission ends.

Step 1206 and step 1207: After receiving the third request message, the S-UPF determines that there is no user service data transmission, and sends the connection release request message to the SMF, to request to release the connection with the SMF. Alternatively, after receiving the third request message, if there is user service data transmission, the UPF sends the connection release request message to the SMF after the user service data transmission ends. Correspondingly, the SMF releases the connection with the S-UPF after receiving the connection release request message, and the connection is successfully released.

For specific implementations of the steps in the procedure shown in FIG. 12, refer to the related descriptions in FIG. 6 and FIG. 7. Details are not described herein again.

It should be understood that, based on FIG. 12, in a possible manner, the steps of determining that the first satellite enters the first service area and sending the connection establishment request message may be performed on the S-UPF. In other words, the S-UPF may initiate a connection establishment process, and the SMF may initiate a connection release process.

Based on the system architecture shown in FIG. 2, FIG. 13 shows another N4 interface establishment and release procedure. In this procedure, an example in which a core network element is an SMF and a satellite-borne apparatus is an S-UPF is used for description.

As shown in FIG. 13, the procedure includes the following steps.

Step 1301 to step 1303: When a first satellite enters a first service area, the SMF establishes a connection with the S-UPF. For the process, refer to the related procedure in FIG. 10.

Step 1304: The SMF determines that the first satellite leaves the first service area. For the process, refer to the related procedure in FIG. 10.

Step 1305: When determining that the first satellite leaves the first service area, the SMF sends a second request message to the S-UPF of the first satellite, to request to retain the connection and stop detecting reachability of the connection.

Optionally, a connection release request message carries a cause value, and the cause value indicates that the satellite leaves the service area.

Step 1306a and step 1306b: The S-UPF and the SMF separately retain the connection and stop detecting the reachability of the connection in a first time period.

Step 1307: When the first time period ends or when the SMF determines that the first satellite enters the first service area, the SMF sends a connection establishment request message to the S-UPF of the first satellite.

For specific implementations of the steps in the procedure shown in FIG. 13, refer to the related descriptions in FIG. 6 and FIG. 7. Details are not described herein again.

A process in which the S-UPF initiates connection establishment when determining that the first satellite enters the first service area and initiates connection release when determining that the first satellite leaves the first service area is similar to the procedure shown in FIG. 13. Details are not described herein again.

It should be understood that, based on FIG. 13, in a possible manner, the steps of determining that the first satellite enters the first service area and sending the connection establishment request message may be performed on the S-UPF. In other words, the S-UPF may initiate a connection establishment process, and the SMF sends the second request message.

It should be understood that, based on FIG. 13, in a possible manner, the steps of determining that the first satellite leaves the first service area and sending the second request message may be performed on the S-UPF. In other words, the SMF may initiate a connection establishment process, and the S-UPF sends the second request message.

Based on the system structure shown in FIG. 2 or FIG. 3, FIG. 14 shows an N2 interface establishment and release procedure. In this procedure, an example in which a core network element is an AMF and a satellite-borne apparatus is an S-RAN is used for description.

Implementations of step 1401 to step 1406 in FIG. 14 are basically similar to implementations of step 1001 to step 1006 in FIG. 10. A difference lies in that, compared with FIG. 10, in FIG. 14, the core network element is replaced with an AMF, and the satellite apparatus is replaced with an S-RAN.

It should be understood that, based on FIG. 14, in a possible manner, the steps of determining that the first satellite enters the first service area and sending the connection establishment request message may be performed on the S-RAN. In other words, the S-RAN may initiate a connection establishment process, and the AMF may initiate a connection release process.

It should be understood that, based on FIG. 14, in a possible manner, the steps of determining that the first satellite leaves the first service area and sending the connection release request message may be performed on the S-RAN. In other words, an SMF may initiate a connection establishment process, and the S-RAN may initiate a connection release process.

Based on the system structure shown in FIG. 2 or FIG. 3, FIG. 15 shows an N2 interface establishment and release procedure. In this procedure, an example in which a core network element is an AMF and a satellite-borne apparatus is an S-RAN is used for description.

Implementations of step 1501 to step 1506 in FIG. 15 are basically similar to implementations of step 1001 to step 1006 in FIG. 10. A difference lies in that, compared with FIG. 10, in FIG. 15, the S-RAN initiates a connection establishment process when determining that the first satellite enters the first service area, and the S-RAN sends a connection release process when determining that the first satellite leaves the first service area.

Based on the system structure shown in FIG. 3, FIG. 16 shows an N3 interface establishment and release procedure. In this procedure, an example in which a core network element is a UPF and a satellite-borne apparatus is an S-RAN is used for description.

Implementations of step 1601 to step 1606 in FIG. 16 are basically similar to implementations of step 1001 to step 1006 in FIG. 10. A difference lies in that, compared with FIG. 10, in FIG. 16, the core network element is replaced with a UPF.

It should be understood that, based on FIG. 16, in a possible manner, the steps of determining that the first satellite enters the first service area and sending the connection establishment request message may be performed on the S-RAN. In other words, the S-RAN may initiate a connection establishment process, and the UPF may initiate a connection release process.

It should be understood that, based on FIG. 16, in a possible manner, the steps of determining that the first satellite leaves the first service area and sending the connection release request message may be performed on the S-RAN. In other words, the UPF may initiate a connection establishment process, and the S-RAN may initiate a connection release process.

Based on the system structure shown in FIG. 2 or FIG. 3, FIG. 17 shows an N3 interface establishment and release procedure. In this procedure, an example in which a core network element is a UPF and a satellite-borne apparatus is an S-RAN is used for description.

Implementations of step 1701 to step 1706 in FIG. 17 are basically similar to implementations of step 1501 to step 1506 in FIG. 15. A difference lies in that, compared with FIG. 15, in FIG. 17, the S-RAN sends the connection establishment request message to the UPF when determining that the first satellite enters the first service area, to request to establish a connection based only on an N3 interface, and the S-RAN sends the connection release request message to the UPF when determining that the first satellite leaves the first service area, to request to release the connection based on the N3 interface.

It may be understood that, to implement the functions in the foregoing embodiments, the core network element and the satellite-borne apparatus include corresponding hardware structures and/or software modules for performing the functions. A person skilled in the art should be easily aware that, in this application, the units and method steps in the examples described with reference to embodiments disclosed in this application can be implemented by using hardware or a combination of hardware and computer software. Whether a function is performed by using hardware or hardware driven by computer software depends on particular application scenarios and design constraint conditions of the technical solutions.

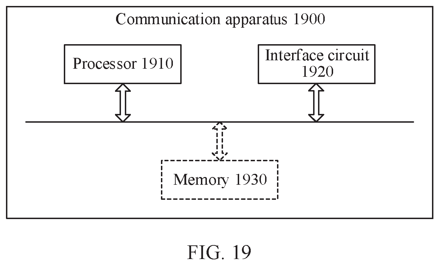

FIG. 18 and FIG. 19 are diagrams of structures of possible communication apparatuses according to embodiments of this application. These communication apparatuses may be configured to implement functions of the core network element or the satellite-borne apparatus in the foregoing method embodiments. Therefore, beneficial effects of the foregoing method embodiments can also be implemented. In embodiments of this application, the communication apparatus may be the core network element (for example, an SMF, an AMF, or a UPF) shown in FIG. 2 or FIG. 3, or may be the satellite-borne apparatus (for example, an S-RAN or an S-UPF) shown in FIG. 2 or FIG. 3, or may be a module (for example, a chip) used in the core network element or the satellite-borne apparatus.

As shown in FIG. 18, a communication apparatus 1800 includes a processing unit 1810 and a transceiver unit 1820. The communication apparatus 1800 is configured to implement functions of the core network element or the satellite-borne apparatus in the method embodiment shown in any one of FIG. 6 to FIG. 17.

For example, when the communication apparatus 1800 is configured to implement the functions of the core network element in the method embodiment shown in FIG. 6, the processing unit 1810 is configured to: determine that a first satellite enters a first service area; and send a connection establishment request message to a satellite-borne apparatus of the first satellite via the transceiver unit 1820. The connection establishment request message is used to request to establish a connection between the core network element and the satellite-borne apparatus.

For another example, when the communication apparatus 1800 is configured to implement the functions of the core network element in the method embodiment shown in FIG. 7, the processing unit 1810 is configured to: determine that a first satellite leaves a first service area; and send a connection release request message to a satellite-borne apparatus of the first satellite via the transceiver unit 1820. The connection release request message is used to request to release a connection between the core network element and the satellite-borne apparatus.

For another example, when the communication apparatus 1800 is configured to implement the functions of the satellite-borne apparatus in the method embodiment shown in FIG. 8, the processing unit 1810 is configured to: determine that a first satellite enters a first service area; and send a connection establishment request message to a core network element via the transceiver unit 1820. The connection establishment request message is used to request to establish a connection between the satellite-borne apparatus and the core network element.

For another example, when the communication apparatus 1800 is configured to implement the functions of the satellite-borne apparatus in the method embodiment shown in FIG. 9, the processing unit 1810 is configured to: determine that a first satellite leaves a first service area; and send a connection release request message to a core network element via the transceiver unit 1820. The connection release request message is used to request to release a connection between the satellite-borne apparatus and the core network element.

For more detailed descriptions of the processing unit 1810 and the transceiver unit 1820, directly refer to the related descriptions in the method embodiment shown in any one of FIG. 6 to FIG. 17. Details are not described herein again.

As shown in FIG. 19, a communication apparatus 1900 includes a processor 1910 and an interface circuit 1920. The processor 1910 and the interface circuit 1920 are coupled to each other. It may be understood that the interface circuit 1920 may be a transceiver or an input/output interface. Optionally, the communication apparatus 1900 may further include a memory 1930, configured to: store instructions executed by the processor 1910, or store input data required by the processor 1910 to run the instructions, or store data generated after the processor 1910 runs the instructions.

When the communication apparatus 1900 is configured to implement the method shown in any one of FIG. 6 to FIG. 17, the processor 1910 is configured to implement a function of the processing unit 1810, and the interface circuit 1920 is configured to implement a function of the transceiver unit 1820.

When the communication apparatus is a chip used in a core network element, the chip implements the function of the core network element in the foregoing method embodiments. The chip receives information from another module in the core network element, or the chip sends information to another module in the core network element.

When the communication apparatus is a module used in the satellite-borne apparatus, the satellite-borne apparatus module implements the function of the satellite-borne apparatus in the foregoing method embodiments. The satellite-borne apparatus module receives information from another module in a network device, or the satellite-borne apparatus module sends information to another module. The satellite-borne apparatus module herein may be a baseband chip of the satellite-borne apparatus, or may be a DU or another module. The DU herein may be a DU in an open radio access network (open radio access network, O-RAN) architecture.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware part, or any combination thereof. The general-purpose processor may be a microprocessor or any regular processor.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes one processor and one memory. As shown in FIG. 19, the communication apparatus 1900 includes one processor 1910 and one memory 1930. The processor 1910 is coupled to the memory 1930. The memory 1930 stores instructions. When the instructions stored in the memory 1930 are executed by the processor 1910, the communication apparatus 1900 performs the method performed by the terminal device or the network device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network device or a terminal. The processor and the storage medium may alternatively exist in a network device or a terminal as discrete components.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "multiple" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.  A satellite communication method, comprising:

    determining, by a core network element, that a first satellite enters a first service area; and
    sending, by the core network element, a connection establishment request message to a satellite-borne apparatus of the first satellite, wherein the connection establishment request message is used to request to establish a connection between the core network element and the satellite-borne apparatus.

2.  The method according to claim 1, wherein the determining, by the core network element, that the first satellite enters the first service area comprises:

    determining, by the core network element based on one or more of the following information, that the first satellite enters the first service area: ephemeris information, ground coverage information, or connection information of a feeder link between the first satellite and a gateway, wherein the ground coverage information comprises time information of covering the first service area by the first satellite; or
    receiving, by the core network element, first indication information from the satellite-borne apparatus, wherein the first indication information indicates that the first satellite enters the first service area.

3.  The method according to claim 1 or 2, wherein the method further comprises:
    when the first satellite leaves the first service area, sending, by the core network element, a connection release request message to the satellite-borne apparatus, wherein the connection release request message is used to request to release the connection between the core network element and the satellite-borne apparatus.

4.  The method according to claim 3, further comprising:

    sending, by the core network element, a first request message to the satellite-borne apparatus, wherein the first request message is used to request user service data transmission information of the satellite-borne apparatus; and
    receiving, by the core network element, a first response message from the satellite-borne apparatus, wherein the first response message comprises the user service data transmission information of the satellite-borne apparatus; and

the sending, by the core network element, the connection release request message to the satellite-borne apparatus comprises:

sending, by the core network element, the connection release request message to the satellite-borne apparatus based on the first response message.

5. The method according to claim 4, wherein the first request message comprises a cause value, and the cause value indicates that the satellite leaves the service area.

6. The method according to claim 4 or 5, wherein the first response message comprises first information, and the first information indicates that the satellite-borne apparatus has no user service data transmission.

7. The method according to claim 1 or 2, wherein the method further comprises:

when the first satellite leaves the first service area, sending, by the core network element, a second request message to the satellite-borne apparatus, wherein the second request message is used to request the satellite-borne apparatus to retain the connection between the core network element and the satellite-borne apparatus and stop detecting reachability of the connection; and

retaining, by the core network element, the connection and stopping detecting the reachability of the connection.

8. The method according to claim 7, wherein the retaining the connection and stopping detecting the reachability of the connection comprises:

retaining the connection and stopping detecting the reachability of the connection within a first time period, wherein the first time period is a time period from a second moment to a moment at which the first satellite enters the first service area again, and the second moment is a moment at which the first satellite leaves the first service area.

9. The method according to claim 7 or 8, wherein the method further comprises:

when the first satellite enters the first service area again, re-establishing, by the core network element, the connection, and/or re-starting to detect the reachability of the connection.

10. The method according to any one of claims 7 to 9, wherein the second request message comprises a cause value, and the cause value indicates that the satellite leaves the service area.

11. The method according to claim 1 or 2, wherein the method further comprises:

when the first satellite leaves the first service area, sending, by the core network element, a third request message to the satellite-borne apparatus, wherein the third request message is used to trigger the satellite-borne apparatus to send a connection release request message when there is no user service data transmission, and the connection release request message is used to request to release the connection between the core network element and the satellite-borne apparatus.

12. The method according to claim 11, wherein the method further comprises:

receiving, by the core network element, the connection release request message from the satellite-borne apparatus; and

releasing, by the core network element, the connection based on the connection release request message.

13. The method according to any one of claims 3 to 12, further comprising:

determining, by the core network element based on one or more of the following information, that the first satellite leaves the first service area: ephemeris information, ground coverage information, or connection information of a feeder link between the first satellite and a gateway; or

receiving, by the core network element, second indication information from the satellite-borne apparatus, wherein the second indication information indicates that the first satellite leaves the first service area.

14. The method according to any one of claims 1 to 13, wherein the method further comprises:

determining, by the core network element based on capability information of the core network element and capability information of the satellite-borne apparatus, that the core network element sends the connection release request message when the first satellite leaves the first service area.

**15.** The method according to claim 14, wherein after the core network element sends the connection establishment request message to the satellite-borne apparatus of the first satellite, the method further comprises:
receiving, by the core network element, a connection release response message from the satellite-borne apparatus, wherein the connection establishment response message comprises the capability information of the satellite-borne apparatus.

**16.** The method according to any one of claims 1 to 15, wherein the connection establishment request message comprises the capability information of the core network element.

**17.** The method according to claim 1 or 2, wherein the method further comprises:

receiving, by the core network element, a connection release request message from the satellite-borne apparatus, wherein the connection release request message is used to request to release the connection; and releasing, by the core network element, the connection based on the connection release request message.

**18.** The method according to any one of claims 1 to 17, wherein the core network element is a session management function entity, and the satellite-borne apparatus of the first satellite is a satellite-borne user plane function entity of the first satellite; or

the core network element is an access and mobility management function entity, and the satellite-borne apparatus of the first satellite is a satellite-borne radio access network device of the first satellite; or
the core network element is a user plane function entity, and the satellite-borne apparatus of the first satellite is a satellite-borne radio access network of the first satellite.

**19.** A satellite communication method, comprising:

determining, by a satellite-borne apparatus of a first satellite, that the first satellite enters a first service area; and
sending, by the satellite-borne apparatus, a connection establishment request message to a core network element, wherein the connection establishment request message is used to request to establish a connection between the satellite-borne apparatus and the core network element.

**20.** The method according to claim 19, wherein the determining, by the satellite-borne apparatus of the first satellite, that the first satellite enters the first service area comprises:

determining, by the satellite-borne apparatus based on one or more of the following information, that the first satellite enters the first service area: ephemeris information, ground coverage information, or connection information of a feeder link between the first satellite and a gateway, wherein
the ground coverage information comprises time information of covering the first service area by the first satellite.

**21.** The method according to claim 19 or 20, wherein the method further comprises:
when the first satellite leaves the first service area, sending, by the satellite-borne apparatus, a connection release request message to the core network element, wherein the connection release request message is used to request to release the connection between the satellite-borne apparatus and the core network element.

**22.** The method according to claim 21, wherein before the sending, by the satellite-borne apparatus, the connection release request message to the core network element, the method further comprises:
sending, by the satellite-borne apparatus, indication information to the core network element, wherein the indication information indicates that the first satellite leaves the first service area.

**23.** The method according to claim 19 or 20, wherein the method further comprises:

when the first satellite leaves the first service area, sending, by the satellite-borne apparatus, a fourth request message to the core network element, wherein the fourth request message is used to request the core network element to retain the connection and stop detecting reachability of the connection; and
retaining, by the satellite-borne apparatus, the connection and stopping detecting the reachability of the connection.

**24.** The method according to claim 23, wherein the retaining the connection and stopping detecting the reachability of the connection comprises:

retaining the connection and stopping detecting the reachability of the connection within a first time period, wherein the first time period is a time period from a second moment to a moment at which the first satellite enters the first service area again, and the second moment is a moment at which the first satellite leaves the first service area.

25. The method according to claim 23 or 24, wherein the method further comprises:
when the first satellite enters the first service area again, re-establishing, by the satellite-borne apparatus, the connection, and/or re-starting to detect the reachability of the connection.

26. The method according to any one of claims 23 to 25, wherein the fourth request message comprises a cause value, and the cause value indicates that the satellite leaves the service area.

27. The method according to any one of claims 19 to 26, further comprising:
determining, by the satellite-borne apparatus based on one or more of the following information, that the first satellite leaves the first service area: ephemeris information, ground coverage information, or connection information of a feeder link between the first satellite and a gateway.

28. The method according to any one of claims 19 to 27, wherein the method further comprises:
determining, by the satellite-borne apparatus based on capability information of the satellite-borne apparatus and capability information of the core network element, that the satellite-borne apparatus sends the connection release request message when the first satellite leaves the first service area, wherein the capability comprises having or not having a capability of determining that the satellite enters or leaves the service area.

29. The method according to claim 28, wherein after the satellite-borne apparatus sends the connection establishment request message to the core network element, the method further comprises:
receiving, by the satellite-borne apparatus, a connection release response message from the core network element, wherein the connection establishment response message comprises the capability information of the core network element.

30. The method according to any one of claims 19 to 29, wherein the connection establishment request message further comprises the capability information of the satellite-borne apparatus.

31. The method according to any one of claims 19 to 30, wherein the core network element is a session management function entity, and the satellite-borne apparatus of the first satellite is a satellite-borne user plane function entity of the first satellite; or

the core network element is an access and mobility management function entity, and the satellite-borne apparatus of the first satellite is a satellite-borne radio access network device of the first satellite; or
the core network element is a user plane function entity, and the satellite-borne apparatus of the first satellite is a satellite-borne radio access network of the first satellite.

32. A communication method, comprising:

determining, by a satellite-borne apparatus of a first satellite, that the first satellite leaves a first service area; and
sending, by the satellite-borne apparatus, a connection release request message to a core network element, wherein the connection release request message is used to request to release a connection between the satellite-borne apparatus and the core network element.

33. The method according to claim 32, wherein the determining, by the satellite-borne apparatus, that the first satellite leaves the first service area comprises:
determining, by the satellite-borne apparatus based on one or more of the following information, that the first satellite leaves the first service area: ephemeris information, ground coverage information, or connection information of a feeder link between the first satellite and a gateway, wherein the ground coverage information comprises time information of covering the first service area by the first satellite.

34. The method according to claim 32 or 33, wherein before the sending, by the satellite-borne apparatus, the connection release request message to the core network element, the method further comprises:
sending, by the satellite-borne apparatus, indication information to the core network element, wherein the indication information indicates that the first satellite leaves the first service area.

35. The method according to any one of claims 32 to 34, wherein after the sending, by the satellite-borne apparatus, the connection release request message to the core network element, the method further comprises:

disconnecting, by the satellite-borne apparatus, from a power supply; or
deleting, by the satellite-borne apparatus, information about the connection, stopping detecting reachability of the connection, and disconnecting from a power supply.

36. The method according to any one of claims 32 to 35, wherein the core network element is a session management function entity, and the satellite-borne apparatus of the first satellite is a satellite-borne user plane function entity of the first satellite; or

the core network element is an access and mobility management function entity, and the satellite-borne apparatus of the first satellite is a satellite-borne radio access network device of the first satellite; or
the core network element is a user plane function entity, and the satellite-borne apparatus of the first satellite is a satellite-borne radio access network of the first satellite.

37. A communication method, comprising:

determining, by a core network element, that a first satellite leaves a first service area; and
sending, by the core network element, a connection release request message to a satellite-borne apparatus of the first satellite, wherein the connection release request message is used to request to release a connection between the core network element and the satellite-borne apparatus.

38. The method according to claim 37, wherein after the first satellite leaves the first service area, further comprising:

sending, by the core network element, a first request message to the satellite-borne apparatus, wherein the first request message is used to query whether the satellite-borne apparatus has user service data transmission;
receiving, by the core network element, a first response message from the satellite-borne apparatus; and
the sending, by the core network element, the connection release request message to the satellite-borne apparatus of the first satellite comprises:
if the first response message indicates that the satellite-borne apparatus has no user service data transmission, sending, by the core network element, the connection release request message to the satellite-borne apparatus.

39. The method according to claim 38, wherein the first request message comprises a cause value, and the cause value indicates that the satellite leaves the service area.

40. The method according to claim 38 or 39, wherein the first response message comprises first information, and the first information indicates that the satellite-borne apparatus has no user service data transmission.

41. The method according to any one of claims 37 to 40, wherein the determining, by the core network element, that the first satellite leaves the first service area comprises:

determining, by the core network element based on one or more of the following information, that the first satellite leaves the first service area: ephemeris information, ground coverage information, or connection information of a feeder link between the first satellite and a gateway; or
receiving, by the core network element, second indication information from the satellite-borne apparatus, wherein the second indication information indicates that the first satellite leaves the first service area.

42. The method according to any one of claims 37 to 41, wherein the core network element is a session management function entity, and the satellite-borne apparatus of the first satellite is a satellite-borne user plane function entity of the first satellite; or

the core network element is an access and mobility management function entity, and the satellite-borne apparatus of the first satellite is a satellite-borne radio access network device of the first satellite; or
the core network element is a user plane function entity, and the satellite-borne apparatus of the first satellite is a satellite-borne radio access network of the first satellite.

43. A communication method, comprising:

determining, by a core network element, that a first satellite leaves a first service area;

sending, by the core network element, a second request message to a satellite-borne apparatus of the first satellite, wherein the second request message is used to request the satellite-borne apparatus to retain a connection between the core network element and the satellite-borne apparatus and stop detecting reachability of the connection; and

retaining, by the core network element, the connection and stopping detecting the reachability of the connection.

44. The method according to claim 43, wherein the retaining the connection and stopping detecting the reachability of the connection comprises:

retaining the connection and stopping detecting the reachability of the connection within a first time period, wherein the first time period is a time period from a second moment to a moment at which the first satellite enters the first service area again, and the second moment is a moment at which the first satellite leaves the first service area.

45. The method according to claim 43 or 44, wherein the method further comprises:

when the first satellite enters the first service area again, re-establishing, by the core network element, the connection, and/or re-starting to detect the reachability of the connection.

46. The method according to any one of claims 43 to 45, wherein the second request message comprises a cause value, and the cause value indicates that the satellite leaves the service area.

47. The method according to any one of claims 43 to 46, wherein the determining, by the core network element, that the first satellite leaves the first service area comprises:

determining, by the core network element based on one or more of the following information, that the first satellite leaves the first service area: ephemeris information, ground coverage information, or connection information of a feeder link between the first satellite and a gateway; or

receiving, by the core network element, second indication information from the satellite-borne apparatus, wherein the second indication information indicates that the first satellite leaves the first service area.

48. The method according to any one of claims 43 to 47, wherein the core network element is a session management function entity, and the satellite-borne apparatus of the first satellite is a satellite-borne user plane function entity of the first satellite; or

the core network element is an access and mobility management function entity, and the satellite-borne apparatus of the first satellite is a satellite-borne radio access network device of the first satellite; or

the core network element is a user plane function entity, and the satellite-borne apparatus of the first satellite is a satellite-borne radio access network of the first satellite.

49. A communication method, comprising:

determining, by a core network element, that a first satellite leaves a first service area; and

sending, by the core network element, a third request message to a satellite-borne apparatus of the first satellite, wherein the third request message is used to trigger the satellite-borne apparatus to send a connection release request message when there is no user service data transmission.

50. The method according to claim 49, wherein the method further comprises:

releasing, by the core network element, the connection after receiving the connection release request message from the satellite-borne apparatus.

51. The method according to claim 49 or 50, wherein the determining, by the core network element, that the first satellite leaves the first service area comprises:

determining, by the core network element based on one or more of the following information, that the first satellite leaves the first service area: ephemeris information, ground coverage information, or connection information of a feeder link between the first satellite and a gateway; or

receiving, by the core network element, second indication information from the satellite-borne apparatus, wherein the second indication information indicates that the first satellite leaves the first service area.

52. The method according to any one of claims 49 to 51, wherein the core network element is a session management function entity, and the satellite-borne apparatus of the first satellite is a satellite-borne user plane function entity of the first satellite; or

the core network element is an access and mobility management function entity, and the satellite-borne apparatus of the first satellite is a satellite-borne radio access network device of the first satellite; or
the core network element is a user plane function entity, and the satellite-borne apparatus of the first satellite is a satellite-borne radio access network of the first satellite.

53. A communication apparatus, comprising a unit or a module configured to perform the method according to any one of claims 1 to 18, or comprising a unit or a module configured to perform the method according to any one of claims 19 to 31, or comprising a unit or a module configured to perform the method according to any one of claims 32 to 36, or comprising a unit or a module configured to perform the method according to any one of claims 37 to 42, or comprising a unit or a module configured to perform the method according to any one of claims 43 to 48, or comprising a unit or a module configured to perform the method according to any one of claims 49 to 52.

54. A communication apparatus, comprising one or more processors, configured to: perform the method according to any one of claims 1 to 18, or perform the method according to any one of claims 19 to 31, or perform the method according to any one of claims 32 to 36, or perform the method according to any one of claims 37 to 42, or perform the method according to any one of claims 43 to 48, or perform the method according to any one of claims 49 to 52.

55. A communication system, comprising a satellite-borne apparatus and a core network element, wherein

the core network element is configured to perform the method according to any one of claims 1 to 18, and the satellite-borne apparatus is configured to receive a connection establishment request message; or
the satellite-borne apparatus is configured to implement the method according to any one of claims 19 to 31, and the core network element is configured to receive a connection establishment request message; or
the satellite-borne apparatus is configured to implement the method according to any one of claims 32 to 36, and the core network element is configured to receive a connection release request message; or
the core network element is configured to perform the method according to any one of claims 37 to 42, and the satellite-borne apparatus is configured to receive a connection release request message, wherein the connection release request message is used to request to release a connection between the core network element and the satellite-borne apparatus; or
the core network element is configured to perform the method according to any one of claims 43 to 48, and the satellite-borne apparatus is configured to receive a second request message, wherein the second request message is used to request the satellite-borne apparatus to retain a connection between the core network element and the satellite-borne apparatus and stop detecting reachability of the connection; or
the core network element is configured to perform the method according to any one of claims 49 to 52, and the satellite-borne apparatus is configured to receive a third request message, wherein the third request message is used to trigger the satellite-borne apparatus to send a connection release request message when there is no user service data transmission.

56. A computer-readable storage medium, wherein the computer-readable storage medium stores a computer program or instructions, and when the computer program or the instructions are executed by a communication apparatus, the method according to any one of claims 1 to 18 is implemented, or the method according to any one of claims 19 to 31 is implemented, or the method according to any one of claims 32 to 36 is implemented, or the method according to any one of claims 37 to 42 is implemented, or the method according to any one of claims 43 to 48 is implemented, or the method according to any one of claims 49 to 52 is implemented.

57. A chip system, comprising: a memory, configured to store a computer program; and a processor, wherein after the processor invokes the computer program from the memory and runs the computer program, a communication apparatus in which the chip system is mounted is caused to perform the method according to any one of claims 1 to 18, or perform the method according to any one of claims 19 to 31, or perform the method according to any one of claims 32 to 36, or perform the method according to any one of claims 37 to 42, or perform the method according to any one of claims 43 to 48, or perform the method according to any one of claims 49 to 52.

**58.** A computer program product, wherein when the computer program product is invoked by a computer, the computer is caused to perform the method according to any one of claims 1 to 18, or perform the method according to any one of claims 19 to 31, or perform the method according to any one of claims 32 to 36, or perform the method according to any one of claims 37 to 42, or perform the method according to any one of claims 43 to 48, or perform the method according to any one of claims 49 to 52.

| NSSF | NEF | NRF | PCF | UDM | AF |
|------|-----|-----|-----|-----|-----|

Nnssf     Nnef     Nnrf     Npcf     Nudm     Naf

Nausf     Namf     Nsmf

| AUSF | AMF | SMF |
|------|-----|-----|

N1

N2

N4

| UE | (R)AN | — N3 — | UPF | — N6 — | DN |
|----|-------|--------|-----|--------|-----|

FIG. 1

EP 4 780 129 A1

FIG. 2

FIG. 3

Time

T1　　　　　　　T2　T3　　　　　T4

Satellite　Satellite　Satellite　Satellite　Satellite　Satellite　Satellite　Satellite

Gateway 1

First
location area

Second
location area

Gateway 2

First service area

Core
network

FIG. 4

FIG. 5

FIG. 6

First satellite

Satellite-borne apparatus

Core network element

701: Determine that the first satellite leaves a first service area

702: Connection release request message

703: Connection release response message

FIG. 7

First satellite

Satellite-borne apparatus

Core network element

801: Determine that the first satellite enters a first service area

802: Connection establishment request message

803: Connection establishment response message

FIG. 8

First satellite

Satellite-borne apparatus

Core network element

901: Determine that the first satellite leaves a first service area

902: Connection release request message

903: Connection release response message

FIG. 9

First satellite

S-UPF

Gateway

SMF

1001: Determine that the first satellite enters a first service area

1002: Connection establishment request message (optionally carrying capability information of the SMF)

1003: Connection establishment response message (optionally carrying capability information of the S-UPF)

1004: Determine that the first satellite leaves the first service area

1005: Connection release request message (optionally carrying a cause value, where the cause value indicates that the satellite leaves the service area)

1006: Connection release response message

FIG. 10

```
┌─────────────────┐          ┌──────────┐      ┌──────────┐
│  First satellite │          │  Gateway │      │   SMF    │
│  ┌───────────┐  │          └────┬─────┘      └────┬─────┘
│  │   S-UPF   │  │               │                 │
│  └───────────┘  │               │                 │
└────────┬────────┘               │                 │
         │                        │     ┌───────────┴───────────┐
         │                        │     │ 1101: Determine that the│
         │                        │     │ first satellite enters a first│
         │                        │     │      service area      │
         │                        │     └───────────┬───────────┘
         │ 1102: Connection establishment request message │
         │◄───────────────────────────────────────────────│
         │ 1103: Connection establishment response message│
         │────────────────────────────────────────────────►
         │                        │     ┌───────────┴───────────┐
         │                        │     │ 1104: Determine that the│
         │                        │     │ first satellite leaves the first│
         │                        │     │      service area      │
         │                        │     └───────────┬───────────┘
         │ 1105: First request message, used to request user service│
         │ data transmission information (optionally carrying a│
         │ cause value, where the cause value indicates that the│
         │      satellite leaves the service area)         │
         │◄────────────────────────────────────────────────│
         │ 1106: First response message, indicating that   │
         │ there is no user service data transmission      │
         │─────────────────────────────────────────────────►
         │ 1107: Connection release request message        │
         │◄────────────────────────────────────────────────│
         │ 1108: Connection release response message       │
         │─────────────────────────────────────────────────►
```

FIG. 11

First satellite

S-UPF

Gateway

SMF

1201: Determine that the first satellite enters a first service area

1202: Connection establishment request message

1203: Connection establishment response message

1204: Determine that the first satellite leaves the first service area

1205: Third request message, used to trigger the S-UPF to send a connection release request message when there is no user service data transmission

1206: Determine that there is no user service data transmission or user service data transmission ends

1207: Connection release request message

FIG. 12

First satellite

S-UPF

Gateway

SMF

1301: Determine that the first satellite enters a first service area

1302: Connection establishment request message

1303: Connection establishment response message

1304: Determine that the first satellite leaves the first service area

1305: Second request message, used to request to retain a connection and stop detecting reachability of the connection (carrying a cause value, where the cause value indicates that the satellite leaves the service area)

1306a: Retain the connection and stop detecting the reachability of the connection in a first time period

1306b: Retain the connection and stop detecting the reachability of the connection in the first time period

1307: Connection establishment request message

FIG. 13

FIG. 14

FIG. 15

FIG. 16

```
  First satellite
 ┌──────────────┐              Gateway            UPF
 │    S-RAN     │
 └──────────────┘
```

1701: Determine that the first satellite enters a first service area

1702: Connection establishment request message (optionally carrying capability information of the S-RAN)

1703: Connection establishment response message (optionally carrying capability information of the UPF)

1704: Determine that the first satellite leaves the first service area

1705: Connection release request message (optionally carrying a cause value, where the cause value indicates that the satellite leaves the service area)

1706: Connection release response message

FIG. 17

Communication apparatus 1800

Processing unit 1810

Transceiver unit 1820

FIG. 18

Communication apparatus 1900

Processor 1910

Interface circuit 1920

Memory 1930

FIG. 19

## INTERNATIONAL SEARCH REPORT

| International application No. |
| --- |
| **PCT/CN2024/130868** |

| A. | CLASSIFICATION OF SUBJECT MATTER |
| --- | --- |
| | H04W 76/10(2018.01)i |

According to International Patent Classification (IPC) or to both national classification and IPC

| B. | FIELDS SEARCHED |
| --- | --- |

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, DWPI, ENTXTC, CNKI, CJFD, 3GPP: 核心网, 卫星, 星上, 星载, 地面站, 信关站, 覆盖, 区域, 范围, 进入, 离开, 移动, 移出, 连接, 释放, 保留, 可达, 请求, NTN, 非地面, core network, CN, satellite, on-board, ground, coverage, area, in, out, leaving, moving, connection, release, reserve, reachable, request

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116760450 A (TECHNOLOGY INNOVATION CENTER OF CHINA TELECOM CORP., LTD. et al.) 15 September 2023 (2023-09-15) abstract, description, paragraphs [0050]-[0093], and figures 1-10 | 1-6, 11-22, 27-42, 49-58 |
| X | CN 113810097 A (GUANGZHOU IPLOOK TECHNOLOGIES CO., LTD.) 17 December 2021 (2021-12-17) abstract, description, paragraphs [0043]-[0051], and figures 1-3 | 19-22, 27-31, 53-58 |
| PX | CN 117793946 A (HUAWEI TECHNOLOGIES CO., LTD.) 29 March 2024 (2024-03-29) abstract, description, paragraphs [0093]-[0363], and figures 1-19 | 1-58 |
| A | QUALCOMM INC. "New KIs and Solutions for Support of Satellite Access in 5G in TR 23.737" *SA WG2 Meeting #139e, S2-2004263*, 08 June 2020 (2020-06-08), entire document | 1-58 |
| A | CN 114944859 A (AEROSPACE SCIENCE & INDUSTRY HAIYING GROUP CO., LTD.) 26 August 2022 (2022-08-26) entire document | 1-58 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 February 2025** | **14 February 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/130868**

| Patent document cited in search report | | | Publication date (day/month/year) | Patent family member(s) | Publication date (day/month/year) |
|---|---|---|---|---|---|
| CN | 116760450 | A | 15 September 2023 | None | |
| CN | 113810097 | A | 17 December 2021 | None | |
| CN | 117793946 | A | 29 March 2024 | None | |
| CN | 114944859 | A | 26 August 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311501708